# EUROPEAN PATENT APPLICATION

(11) **EP 4 826 872 A1**
(43) Date of publication of application: **21.10.2026**
(21) Application number: 24923314.9
(22) Date of filing: 12.09.2024
(51) Int. Cl.: H01M 50/242, H01M 50/204, H01M 50/249, H01M 10/6555

(54) **BATTERY AND ELECTRIC DEVICE**

(30) Priority: 08.02.2024 CN 202410177239
(71) Applicant: Contemporary Amperex Technology Co., Limited, Ningde, Fujian 352100 (CN)
(72) Inventor: LIAO, Baixiang, Ningde, Fujian 352100 (CN); QIN, Feng, Ningde, Fujian 352100 (CN); CHENG, Longfei, Ningde, Fujian 352100 (CN); QU, Jingrui, Ningde, Fujian 352100 (CN)
(74) Representative: Lorenz Seidler Gossel Part. mbB
(86) International application number: PCT/CN2024/118605
(87) International publication number: WO 2025/167106

(57) **Abstract**

The present application relates to the technical field of batteries, and provides a battery and an electric device. The battery comprises a case, a plurality of battery cell groups, thermal management components, and a protective element. The case is provided with a first wall in a first direction. The plurality of battery cell groups are accommodated in the case, the plurality of battery cell groups are arranged in a second direction, each cell group comprises at least one battery cell, and the second direction intersects with the first direction. In the second direction, each thermal management component is arranged between two adjacent battery cell groups, and the thermal management component is configured to exchange heat with the battery cells. The protective element is arranged between the first wall and the plurality of battery cell groups in the first direction, and the protective element is configured to transfer external force borne by the first wall to the battery cell groups so as to protect the thermal management components, thereby reducing the impact of collision force generated on the first wall on the thermal management components, reducing the risk of leakage and other failures of the thermal management components during use, improving the use reliability of the battery, and prolonging the service life of the battery.

## Description

### CROSS-REFERENCE TO RELATED APPLICATIONS

This application claims priority to Chinese Patent Application No. 202410177239X, filed on February 8, 2024, and entitled "BATTERY AND ELECTRIC APPARATUS", which is incorporated herein by reference in its entirety.

### TECHNICAL FIELD

This application relates to the field of battery technology, and in particular, to a battery and an electric apparatus.

### BACKGROUND

In recent years, new energy vehicles have developed rapidly, and in the field of electric vehicles, traction batteries, as the traction source of electric vehicles, play an irreplaceable important role. A battery includes a box and a plurality of battery cells accommodated in the box. As a core component of new energy vehicles, the battery has high requirements in terms of both use reliability and service life. During the continuous charging and discharging of the battery cells in the battery, a large amount of heat is generated. Thus, a thermal management system for regulating the temperature of the battery cells is disposed in the box to alleviate the phenomenon of temperature rise inside the battery. However, the thermal management system of the existing battery is prone to damage during use, which leads to a risk of liquid leakage in the battery and thus is not conducive to improving the use reliability and service life of the battery.

### SUMMARY

Embodiments of this application provide a battery and an electric apparatus, which can effectively improve the use reliability and service life of the battery.

According to a first aspect, an embodiment of this application provides a battery including a box, a plurality of battery cell groups, a thermal management component, and a protective member, where the box has a first wall in a first direction; the plurality of battery cell groups are all accommodated in the box, the plurality of battery cell groups are arranged along a second direction, and the battery cell group includes at least one battery cell; the second direction intersects with the first direction; along the second direction, the thermal management component is disposed between two adjacent battery cell groups, and the thermal management component is configured to exchange heat with the battery cell; and the protective member is disposed between the first wall and the plurality of battery cell groups along the first direction, and the protective member is configured to transmit an external force received by the first wall to the battery cell group so as to protect the thermal management component.

In the above technical solution, the protective member is disposed between the first wall of the box and the plurality of battery cell groups, and the protective member is configured to transmit the external force received by the first wall to the battery cell group, such that when the battery undergoes collision and causes deformation or damage to the first wall, a collision force transmitted from the first wall to the inside of the battery can be distributed to the plurality of battery cell groups through the protective member. This allows the protective member to provide a certain protective effect on the thermal management component, thereby reducing the influence of the collision force generated on the first wall on the thermal management component, alleviating the phenomenon of deformation or damage to the thermal management component due to collision or impact, effectively reducing the risks such as liquid leakage of the thermal management component during use, and helping to improve the use reliability and service life of the battery.

In some embodiments, along the first direction, the protective member abuts against the plurality of battery cell groups, a side of the protective member facing the battery cell group is provided with an avoidance groove, and one end of the thermal management component is disposed in the avoidance groove.

In the above technical solution, the protective member is configured as a structure abutting against the plurality of battery cell groups along the first direction, and the side of the protective member facing the battery cell group is provided with the avoidance groove for insertion of the thermal management component, such that an external impact force received by the first wall can be directly distributed to the plurality of battery cell groups through the protective member, thereby providing a protective effect on the thermal management component through the avoidance groove, reducing the phenomenon of the thermal management component being impacted by the external force, enabling the protective member to transmit and distribute the external force received by the first wall to the plurality of battery cell groups, and achieving the protective effect of the protective member on the thermal management component.

In some embodiments, the protective member includes a body portion and a plurality of abutting portions, where the body portion is disposed between the first wall and the plurality of battery cell groups along the first direction; the plurality of abutting portions are spaced apart along the second direction on a side of the body portion facing the battery cell group; each abutting portion abuts against one battery cell group along the first direction; and the avoidance groove is formed between every two adjacent abutting portions.

In the above technical solution, the protective member includes the body portion and the plurality of abutting portions disposed on the side of the body portion facing the battery cell group along the first direction, and the plurality of abutting portions are spaced apart along the second direction, such that the avoidance groove for insertion of the thermal management component can be formed between every two adjacent abutting portions, and each abutting portion correspondingly abuts against one battery cell group. Thus, when the battery undergoes collision, the external impact force received by the first wall can be distributed to the plurality of battery cell groups through the plurality of abutting portions, featuring a simple structure, facilitating assembly, and providing a good protective effect on the thermal management component.

In some embodiments, along the first direction, the thermal management component is spaced apart from the body portion.

In the above technical solution, the thermal management component is configured as a structure having a gap from the body portion of the protective member in the first direction, such that the thermal management component does not come into contact with a bottom surface of the avoidance groove in the first direction. Thus, when the first wall undergoes collision, the phenomenon of the protective member transmitting stress to the thermal management component along the first direction can be reduced. In addition, a buffer space can be formed between the body portion and the thermal management component, such that even if the body portion of the protective member deforms, the extrusion of the body portion on the thermal management component can be reduced, helping to further improve the protective effect of the protective member on the thermal management component.

In some embodiments, the abutting portion is bonded to the corresponding battery cell group.

In the above technical solution, the abutting portion and the corresponding battery cell group are configured as structures bonded to each other, such that the effect of the abutting portion abutting against the battery cell group can be further improved, and the protective member and the battery cell group can form an entirety, thereby facilitating assembly, and improving the effect of the abutting portion transmitting the impact force received by the first wall to the battery cell group.

In some embodiments, the battery includes a plurality of thermal management components spaced apart along the second direction, and the battery further includes a delivery pipe, where the delivery pipe is disposed between the first wall and the plurality of battery cell groups along the first direction, the delivery pipe extends along the second direction, the delivery pipe is connected to the plurality of thermal management components, and the delivery pipe is configured to supply a heat exchange medium to the thermal management component; and the abutting portion includes a first portion; along the first direction, the first portion has a first surface abutting against the battery cell group; the first surface is provided with an accommodating groove; along the second direction, the accommodating groove runs through side surfaces of two opposite sides of the first portion in the second direction; and the delivery pipe is accommodated in the accommodating groove.

In the above technical solution, the battery is further provided with the delivery pipe configured to deliver the heat exchange medium to the thermal management component, and the delivery pipe is a structure extending along the second direction, thereby facilitating connection between the delivery pipe and the plurality of thermal management components spaced apart along the second direction. First surfaces of first portions of a plurality of abutting portions abutting against the battery cell group are each provided with the accommodating groove, and the accommodating groove is a structure running through the side surfaces of the two opposite sides of the first portion of the abutting portion along the second direction, such that the delivery pipe can be accommodated in the accommodating grooves of the first portions of the plurality of abutting portions. Thus, the protective member can also provide a certain protective effect on the delivery pipe, such that the external impact force received by the first wall can be distributed to the plurality of battery cell groups through the plurality of abutting portions of the protective member, reducing the influence of the collision force generated on the first wall on the delivery pipe, thereby effectively alleviating the phenomenon of deformation or damage to the delivery pipe due to collision or impact, reducing the risks such as liquid leakage of the delivery pipe during use, and helping to improve the use reliability and service life of the battery. In addition, the delivery pipe and the first portion can share part of the space in the first direction, helping to increase the internal space utilization of the battery.

In some embodiments, along the first direction, a depth of the accommodating groove is greater than an outer diameter of the delivery pipe.

In the above technical solution, the depth of the accommodating groove in the first direction is set to be greater than the outer diameter of the delivery pipe, such that after the abutting portion abuts against the battery cell group along the first direction, a distance between the bottom surface of the accommodating groove and the battery cell group in the first direction is greater than the outer diameter of the delivery pipe. Thus, the delivery pipe and the bottom surface of the accommodating groove are structures in clearance fit with each other in the first direction, and the delivery pipe and at least one of the battery cell groups are structures in clearance fit with each other in the first direction. This can alleviate the phenomenon of hard contact or hard collision between the delivery pipe and the protective member. Thus, when the first wall undergoes collision, the phenomenon of the protective member transmitting stress to the delivery pipe along the first direction can be reduced. In addition, a buffer space can be formed between the bottom surface of the accommodating groove and the delivery pipe, such that even if the abutting portion deforms, the extrusion of the abutting portion on the delivery pipe can be reduced, helping to further improve the protective effect of the protective member on the delivery pipe.

In some embodiments, the first surface and a side surface of the accommodating groove are connected to each other through an arc surface.

In the above technical solution, the first surface of the first portion and the side surface of the accommodating groove are configured as structures connected through the arc surface, such that the side surface of the accommodating groove and the first surface of the first portion are structures with arc transition. Thus, the phenomenon of forming sharp corners between the first surface and the side surface of the accommodating groove can be reduced, reducing the risk of the first portion piercing the battery cell. In addition, the first portion of the abutting portion can better transmit the external impact force received by the first wall to the battery cell group, reducing the phenomenon of stress concentration.

In some embodiments, the abutting portion further includes a second portion, where the second portion is connected to a side of the first portion in a third direction, the second portion extends along the third direction away from the first portion, and the second portion abuts against the battery cell group along the first direction; and the first direction, the second direction, and the third direction are non-coplanar and intersect with each other.

In the above technical solution, the abutting portion is further provided with the second portion connected to the side of the first portion in the third direction, and the second portion extends along the third direction and abuts against the battery cell group along the first direction, such that both the first portion and the second portion of the abutting portion are structures abutting against the battery cell group, helping to increase a contact area between the abutting portion and the battery cell group, and increasing a stress area of the battery cell group, thereby alleviating the phenomenon of excessive concentration of force on the battery cell group when the abutting portion transmits the external impact force received by the first wall to the battery cell group, and reducing the risk of the battery cell of the battery cell group being crushed.

In some embodiments, the plurality of abutting portions include a first abutting portion, where the first abutting portion further includes a third portion, the third portion is connected to a side of the first portion facing away from the second portion in the third direction, the third portion extends along the third direction away from the first portion, and the third portion abuts against the battery cell group along the first direction.

In the above technical solution, the plurality of abutting portions further include the first abutting portion, the first abutting portion is further provided with the third portion connected to the side of the first portion facing away from the second portion in the third direction, and the third portion extends along the third direction and abuts against the battery cell group along the first direction, such that the first portion, the second portion, and the third portion of the first abutting portion are all structures abutting against the battery cell group. This helps to further increase a contact area between the first abutting portion and the battery cell group, further increasing a stress area of the corresponding battery cell group, thereby alleviating the phenomenon of excessive concentration of force on the battery cell group when the first abutting portion transmits the external impact force received by the first wall to the corresponding battery cell group, and reducing the risk of the battery cell of the battery cell group being crushed.

In some embodiments, the protective member further includes a reinforcing portion, where the reinforcing portion is connected to the third portions of at least two first abutting portions.

In the above technical solution, the protective member is further provided with the reinforcing portion, where the reinforcing portion is connected to the third portions of at least two first abutting portions. This can improve the structural strength and structural stability of the first abutting portions spaced apart along the second direction. In addition, this can identify a mounting direction of the protective member in the third direction through the reinforcing portion, achieving an anti-error design, thereby helping to reduce assembly errors of the protective member when assembled into the box.

In some embodiments, along the third direction, the reinforcing portion is connected to an end of the third portion away from the first portion.

In the above technical solution, the reinforcing portion is disposed at the end of the third portion away from the first portion in the third direction. This can reduce the interference influence between the reinforcing portion and the thermal management component disposed in the avoidance groove, reducing the phenomenon of extrusion or damage to the thermal management component by the reinforcing portion. In addition, this facilitates the assembly of the protective member between the first wall and the plurality of battery cell groups, helping to reduce the assembly difficulty of the protective member.

In some embodiments, the box includes a box body and a box cover, where the box body is internally provided with an accommodating cavity with an opening, the accommodating cavity is configured to accommodate the plurality of battery cell groups, the opening is provided on a side of the box body in the third direction, and the box body has the first wall in the first direction; and the box cover covers the opening; where along the third direction, the third portion is connected to a side of the first portion facing the box cover.

In the above technical solution, the box is provided with the box body and the box cover, the opening is formed on the side of the box body in the third direction, and the box cover covers the opening of the box body to accommodate the plurality of battery cell groups. The third portion of the first abutting portion is disposed on a side of the first portion of the first abutting portion facing the box cover in the third direction, such that the reinforcing portion is a structure located on the side of the first portion facing the box cover in the third direction. This facilitates the assembly of the protective member between the first wall and the plurality of battery cell groups along the third direction, helping to reduce the assembly difficulty of the protective member. In addition, this facilitates direct observation of the reinforcing portion from the opening of the box body, facilitating identification of the mounting direction of the protective member in the third direction.

In some embodiments, the battery further includes a main pipe and a plurality of connection pipes, where the main pipe is disposed between the first wall and the plurality of battery cell groups along the first direction, and the main pipe extends along the second direction; the plurality of connection pipes are spaced apart along the second direction, and the connection pipes connect the main pipe and the delivery pipe; and the main pipe is configured to supply the heat exchange medium to the delivery pipe.

In the above technical solution, the battery is further provided with the main pipe and the plurality of connection pipes, the main pipe is a structure extending along the second direction, and the plurality of connection pipes are structures spaced apart along the second direction on the main pipe, such that the main pipe is a structure in spaced connection with the delivery pipe through the plurality of connection pipes. This allows the main pipe to form a plurality of delivery points for providing the heat exchange medium on the delivery pipe through the plurality of connection pipes, helping to improve the uniformity of the flow rate and pressure of the heat exchange medium at various positions inside the delivery pipe in the second direction, thereby making the flow rate and pressure of the heat exchange medium supplied by the delivery pipe to the plurality of thermal management components relatively uniform, making the heat exchange capabilities between the plurality of thermal management components similar, and helping to alleviate the phenomenon of local temperature rise in the plurality of battery cell groups inside the battery.

In some embodiments, along the third direction, the main pipe is located on one side of the first portion; and the first direction, the second direction, and the third direction are non-coplanar and intersect with each other.

In the above technical solution, the main pipe is disposed on one side of the first portion in the third direction. This facilitates the assembly of the main pipe, helps to reduce the assembly difficulty of the main pipe, and allows the main pipe and the first portion to share part of the space in the first direction, helping to increase the internal space utilization of the battery. In addition, this can implement mutual separation between the delivery pipe and the main pipe, helping to reduce the interference influence and extrusion between the main pipe and the delivery pipe.

In some embodiments, the plurality of abutting portions include a first abutting portion, where the first abutting portion further includes a third portion, the third portion is connected to a side of the first portion facing the main pipe in the third direction, the third portion extends along the third direction away from the first portion, and the third portion abuts against the battery cell group along the first direction; where along the first direction, the main pipe is located between the first wall and the third portion.

In the above technical solution, the plurality of abutting portions further include the first abutting portion, and the first abutting portion is further provided with the third portion connected to the side of the first portion facing the main pipe in the third direction, where the third portion extends along the third direction and abuts against the battery cell group along the first direction. The main pipe is disposed between the first wall and the third portion in the first direction, such that the protective member can also provide a certain protective effect on the main pipe, allowing the external impact force received by the first wall to be directly distributed to the plurality of battery cell groups through the plurality of abutting portions of the protective member, thereby reducing the influence of the collision force generated on the first wall on the main pipe, alleviating the phenomenon of deformation or damage to the main pipe due to collision or impact, effectively reducing the risks such as liquid leakage of the main pipe during use, and helping to improve the use reliability and service life of the battery.

In some embodiments, along the first direction, a minimum distance between the first wall and the third portion is greater than an outer diameter of the main pipe.

In the above technical solution, the minimum distance between the first wall and the third portion in the first direction is set to be greater than the outer diameter of the main pipe, such that the main pipe and the first wall are structures in clearance fit with each other in the first direction, and the main pipe and at least one of the third portions are structures in clearance fit with each other in the first direction. This can alleviate the phenomenon of hard contact or hard collision between the main pipe and the first wall. Thus, when the first wall undergoes collision, the phenomenon of the protective member transmitting stress to the main pipe along the first direction can be reduced. In addition, a buffer space can be formed between the first wall and the main pipe, such that even if the first wall deforms, the extrusion of the first wall on the main pipe can be reduced, helping to further improve the protective effect of the protective member on the main pipe.

In some embodiments, the plurality of abutting portions further include a second abutting portion; along the third direction, the accommodating groove of the second abutting portion runs through a side of the first portion of the second abutting portion facing the main pipe; the second abutting portion is in one-to-one correspondence with the connection pipe; and the connection pipe is disposed in the accommodating groove of the second abutting portion.

In the above technical solution, an abutting portion at a position corresponding to the connection pipe among the plurality of abutting portions is the second abutting portion, and the accommodating groove of the second abutting portion runs through the side of the first portion facing the main pipe along the third direction, such that the connection pipe can be disposed in the accommodating groove along the third direction and connect the delivery pipe and the main pipe. This helps to reduce the difficulty of the connection pipe in connecting the delivery pipe and the main pipe, thereby reducing the assembly difficulty of the battery. In addition, this allows the connection pipe to be a structure accommodated in the accommodating groove, such that the protective member can also provide a certain protective effect on the connection pipe, allowing the external impact force received by the first wall to be directly distributed to the plurality of battery cell groups through the plurality of abutting portions of the protective member, thereby reducing the influence of the collision force generated on the first wall on the connection pipe, alleviating the phenomenon of deformation or damage to the connection pipe due to collision or impact, effectively reducing the risks such as liquid leakage of the connection pipe during use, and helping to improve the use reliability and service life of the battery.

In some embodiments, along the first direction, the protective member is spaced apart from the first wall.

In the above technical solution, the protective member and the first wall of the box are configured to be spaced apart along the first direction, such that the protective member and the first wall are structures in clearance fit with each other. This facilitates the assembly of the protective member between the first wall and the plurality of battery cell groups, helping to reduce the assembly difficulty of the protective member. In addition, this allows a certain buffer space to be formed between the first wall and the protective member, reducing the phenomenon of the stress of the first wall continuously acting on the battery cell group through the protective member.

In some embodiments, the battery further includes a delivery pipe, where the delivery pipe is disposed between the first wall and the plurality of battery cell groups along the first direction, the delivery pipe extends along the second direction, the delivery pipe is connected to the thermal management component, and the delivery pipe is configured to supply a heat exchange medium to the thermal management component; where a side of the protective member facing the battery cell group in the first direction is provided with an assembly groove, the assembly groove runs through the protective member along the second direction, and the delivery pipe is accommodated in the assembly groove.

In the above technical solution, the battery is further provided with the delivery pipe configured to deliver the heat exchange medium to the thermal management component, and the delivery pipe is a structure extending along the second direction, thereby facilitating mutual connection between the delivery pipe and the thermal management component. The side of the protective member facing the battery cell group in the first direction is provided with the assembly groove, and the assembly groove is a structure running through the protective member along the second direction, such that the delivery pipe can be accommodated in the assembly groove of the protective member. Thus, the protective member can provide a certain protective effect on the delivery pipe, such that the external impact force received by the first wall can be directly distributed to the plurality of battery cell groups through the protective member, reducing the influence of the collision force generated on the first wall on the delivery pipe, thereby effectively alleviating the phenomenon of deformation or damage to the delivery pipe due to collision or impact, reducing the risks such as liquid leakage of the delivery pipe during use, and helping to improve the use reliability and service life of the battery. In addition, the delivery pipe and the protective member can share part of the space in the first direction, helping to increase the internal space utilization of the battery.

In some embodiments, along the first direction, the box has two opposite first walls, and the plurality of battery cell groups are located between the two first walls; where the battery includes two protective members, the two protective members are disposed opposite each other along the first direction, and the two protective members are respectively located between the two first walls and the plurality of battery cell groups.

In the above technical solution, the box has the two first walls disposed opposite each other in the first direction, the two first walls are respectively located on two sides of the plurality of battery cell groups in the first direction, and one protective member is disposed between each first wall and the plurality of battery cell groups, such that the two protective members can protect two ends of the thermal management component in the first direction. This helps to improve the protective effect on the thermal management component, reducing the phenomenon of the collision forces generated on the two first walls on two sides of the box in the first direction directly acting on the thermal management component, thereby further alleviating the situation of deformation or damage to the thermal management component due to collision or impact, further reducing the risks such as liquid leakage of the thermal management component during use, and further improving the use reliability and service life of the battery.

According to a second aspect, an embodiment of this application further provides an electric apparatus including the foregoing battery, where the battery is configured to supply electrical energy.

### BRIEF DESCRIPTION OF DRAWINGS

To more clearly describe the technical solutions of the embodiments of this application, the accompanying drawings required for describing the embodiments will be briefly described below. It should be understood that the accompanying drawings below show merely some embodiments of this application and thus should not be considered as limitations on the scope. Those of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is a structural exploded view of a battery according to some embodiments of this application;
FIG. 4 is a partially enlarged view of portion A of the battery shown in FIG. 3;
FIG. 5 is a schematic assembly diagram of a protective member and a battery cell group of a battery according to some embodiments of this application;
FIG. 6 is a schematic partial assembly diagram of a protective member and a battery cell group of a battery according to some embodiments of this application;
FIG. 7 is a schematic structural diagram of a protective member of a battery according to some embodiments of this application;
FIG. 8 is a partially enlarged view of portion B of the protective member shown in FIG. 7;
FIG. 9 is a partial cross-sectional view of a battery according to some embodiments of this application;
FIG. 10 is a schematic assembly diagram of a delivery pipe and a thermal management component according to some embodiments of this application;
FIG. 11 is a schematic assembly diagram of a protective member and a delivery pipe according to some embodiments of this application;
FIG. 12 is a front view of a protective member of a battery according to some embodiments of this application in a second direction;
FIG. 13 is a cross-sectional view of a first abutting portion of a protective member according to some embodiments of this application; and
FIG. 14 is a cross-sectional view of a second abutting portion of a protective member according to some embodiments of this application.

Reference signs: 1000. vehicle; 100. battery; 10. box; 11. box body; 111. opening; 112. accommodating cavity; 113. bottom wall; 114. first wall; 115. second wall; 12. box cover; 20. battery cell group; 21. battery cell; 30. thermal management component; 40. protective member; 41. avoidance groove; 42. body portion; 43. abutting portion; 431. first portion; 4311. first surface; 4312. accommodating groove; 4312a. side surface of accommodating groove; 4313. arc surface; 432. second portion; 4321. second surface; 433. first abutting portion; 4331. third portion; 4331a. third surface; 434. second abutting portion; 44. assembly groove; 45. reinforcing portion; 50. bonding member; 60. delivery pipe; 70. main pipe; 80. connection pipe; 200. controller; 300. motor; X. first direction; Y. second direction; and Z. third direction.

### DESCRIPTION OF EMBODIMENTS

To make the objectives, technical solutions, and advantages of the embodiments of this application clearer, the technical solutions in the embodiments of this application will be clearly described below in conjunction with the accompanying drawings in the embodiments of this application. Apparently, the described embodiments are only some rather than all of the embodiments of this application. Based on the embodiments in this application, all other embodiments obtained by those of ordinary skill in the art without creative effort fall within the protection scope of this application.

Unless otherwise defined, all technical and scientific terms used in this application have the same meanings as commonly understood by those of ordinary skill in the technical field of this application. The terms used in the specification of this application in this application are only for the purpose of describing specific embodiments and are not intended to limit this application. The terms "comprise", "include", "have", and any variations thereof in the specification and claims of this application and the above description of the accompanying drawings are intended to cover non-exclusive inclusion. The terms "first", "second", and the like in the specification and claims of this application or the above accompanying drawings are intended to distinguish between different objects rather than to indicate a particular order or relative importance.

Reference to "embodiment" in this application means that specific features, structures, or characteristics described with reference to the embodiment may be included in at least one embodiment of this application. The appearance of the phrase at various locations in the specification does not necessarily refer to the same embodiment, nor is it an independent or alternative embodiment that is mutually exclusive with another embodiment.

In the description of this application, it should be noted that, unless otherwise clearly specified and limited, the terms "mounting", "connection", "join", "attachment" should be understood in a broad sense. For example, they may refer to a fixed connection, a detachable connection, or an integral connection, and may refer to a direct connection, an indirect connection via an intermediate medium, or an interaction between two elements. For those of ordinary skill in the art, the specific meanings of the above terms in this application can be understood according to specific situations.

The term "and/or" in this application is only an associative relationship for describing associated objects, indicating that three relationships may be present. For example, A and/or B may indicate three cases: presence of A; presence of both A and B; and presence of only B. In addition, the character "/" in this application generally indicates an "or" relationship between contextually associated objects.

In the embodiments of this application, the same reference signs indicate the same components, and for brevity, detailed descriptions of the same components in different embodiments are omitted. It should be understood that the dimensions such as thicknesses, lengths, and widths of various components in the embodiments of this application shown in the drawings, as well as the dimensions such as the overall thicknesses, lengths, and widths of integrated apparatuses, are only exemplary illustrations and should not constitute any limitation on this application.

In this application, "a plurality of" means more than two (inclusive).

In the embodiments of this application, a battery cell may be a secondary battery, and the secondary battery refers to a battery cell that can continue to be used by activating an active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like, which is not limited in the embodiments of this application.

A battery cell typically includes an electrode assembly. The electrode assembly includes a positive electrode, a negative electrode, and a separator. During the charging and discharging of the battery cell, active ions (such as lithium ions) are intercalated and deintercalated back and forth between the positive electrode and the negative electrode. The separator is disposed between the positive electrode and the negative electrode to prevent short circuits between the positive and negative electrodes and to allow the active ions to pass through.

In some embodiments, the positive electrode may be a positive electrode plate, and the positive electrode plate may include a positive electrode current collector and a positive electrode active material provided on at least one surface of the positive electrode current collector.

As an example, the positive electrode current collector has two opposite surfaces in its own thickness direction, and the positive electrode active material is provided on either or both of the two opposite surfaces of the positive electrode current collector.

As an example, the positive electrode current collector may use a metal foil or a composite current collector. For example, as the metal foil, aluminum with silver plated on the surface, stainless steel with silver plated on the surface, stainless steel, copper, aluminum, nickel, carbon electrode, carbon, nickel, titanium, or the like can be used. The composite current collector may include a polymer substrate and a metal layer. The composite current collector can be formed by forming a metal material (aluminum, aluminum alloy, nickel, nickel alloy, titanium, titanium alloy, silver, and silver alloy, or the like) on a polymer substrate (such as a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and their respective modified compounds. However, this application is not limited to these materials, and other conventional materials that can be used as battery positive electrode active materials can also be used. These positive electrode active materials can be used alone or in combination of two or more. Examples of lithium-containing phosphates may include but are not limited to at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of lithium transition metal oxide may include but are not limited to at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811)), lithium nickel cobalt aluminum oxide (such as LiNi_{0.85}Co_{0.15}Al_{0.05}O₂), and their modified compounds.

In some embodiments, the positive electrode may use foam metal. The foam metal may be foam nickel, foam copper, foam aluminum, foam alloy, or the like. When the foam metal is used as the positive electrode, the surface of the foam metal may be not provided with the positive electrode active material. Certainly, the positive electrode active material can also be provided. As an example, a lithium source material, potassium metal, or sodium metal can also be filled or/and deposited in the foam metal, and the lithium source material is lithium metal and/or a lithium-rich material.

In some embodiments, the negative electrode may be a negative electrode plate, and the negative electrode plate may include a negative electrode current collector.

As an example, the negative electrode current collector may use a metal foil, foam metal, or a composite current collector. For example, as the metal foil, aluminum or stainless steel with silver plated on the surface, stainless steel, copper, aluminum, nickel, carbon electrode, nickel, titanium, or the like can be used. The foam metal may be foam nickel, foam copper, foam aluminum, foam alloy, or the like. The composite current collector may include a polymer substrate and a metal layer. The composite current collector may be formed by forming a metal material (copper, copper alloy, nickel, nickel alloy, titanium, titanium alloy, silver, and silver alloy, or the like) on a polymer substrate (such as a substrate of polypropylene, polyethylene terephthalate, polybutylene terephthalate, polystyrene, or polyethylene).

As an example, the negative electrode plate may include a negative electrode current collector and a negative electrode active material provided on at least one surface of the negative electrode current collector.

As an example, the negative electrode current collector has two opposite surfaces in its own thickness direction, and the negative electrode active material is provided on either or both of the two opposite surfaces of the negative electrode current collector.

As an example, the negative electrode active material may use a negative electrode active material well known in the art for battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as battery negative electrode active materials can also be used. These negative electrode active materials can be used alone or in combination of two or more.

In some embodiments, the positive electrode current collector may be made of aluminum, and the negative electrode current collector may be made of copper.

In some embodiments, the electrode assembly further includes a separator, and the separator is disposed between the positive electrode and the negative electrode.

In some embodiments, the separator is a separator film. Various types of separator films can be used, and any well-known porous separator film with good chemical stability and mechanical stability can be used.

As an example, the separator film may be made of at least one of glass fiber, non-woven fabric, polyethylene, polypropylene, and polyvinylidene fluoride. The separator film may be a single-layer film or a multi-layer composite film. When the separator film is a multi-layer composite film, materials of the layers may be the same or different. The separator may be a separate component located between the positive and negative electrodes, or may be attached to the surfaces of the positive and negative electrodes.

In some embodiments, the separator is a solid-state electrolyte. The solid-state electrolyte is provided between the positive electrode and the negative electrode for transmitting ions and separating the positive and negative electrodes.

In some embodiments, the battery cell further includes an electrolyte, and the electrolyte conducts ions between the positive and negative electrodes. The electrolyte may be in a liquid state, a gel state, or a solid-state. A liquid-state electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also use an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

A gel-state electrolyte includes a polymer as a skeleton network of the electrolyte, combined with an ionic liquid-lithium salt.

A solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, a polyionic liquid-lithium salt, cellulose, or the like.

As an example, the inorganic solid-state electrolyte may include one or more of an oxide solid-state electrolyte (crystalline perovskite, a sodium superconducting ion conductor, garnet, or an amorphous LiPON film), a sulfide solid-state electrolyte (a crystalline lithium superionic conductor (lithium germanium phosphorus sulfur or sulfur silver germanium ore), or amorphous sulfide), a halide solid-state electrolyte, a nitride solid-state electrolyte, and a hydride solid-state electrolyte.

As an example, the composite solid-state electrolyte is formed by adding an inorganic solid-state electrolyte filler to the polymer solid-state electrolyte.

In some embodiments, the electrode assembly is a wound structure. The positive electrode plate and the negative electrode plate are wound into a wound structure.

In some embodiments, the electrode assembly is a laminated structure.

As an example, a plurality of positive electrode plates and a plurality of negative electrode plates may be provided respectively, and the plurality of positive electrode plates and the plurality of negative electrode plates are alternately stacked.

As an example, a plurality of positive electrode plates may be provided, a negative electrode plate is folded to form a plurality of folded sections that are stacked, and a positive electrode plate is sandwiched between adjacent folded sections.

As an example, both the positive electrode plate and the negative electrode plate are folded to form a plurality of folded sections that are stacked.

As an example, a plurality of separators may be provided and respectively disposed between any adjacent positive electrode plates or negative electrode plates.

As an example, the separators may be continuously disposed and are sandwiched between any adjacent positive electrode plates or negative electrode plates by folding or winding.

In some embodiments, the electrode assembly may be cylindrical, flat, prismatic, or of other shapes.

In some embodiments, the electrode assembly is provided with a tab, and the tabs can lead current out from the electrode assembly. The tab includes a positive tab and a negative tab.

In some embodiments, the battery cell may include a housing. The housing is configured to encapsulate components such as the electrode assembly and the electrolyte. The housing may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of other shapes. The prismatic battery cell includes but is not limited to a square shell battery cell, a blade-shaped battery cell, and a prismatic battery. The prismatic battery is, for example, a hexagonal prism battery.

The battery mentioned in the embodiments of this application refers to a single physical module that includes one or more battery cells to provide higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell, and the battery cell or a battery module is accommodated in the box.

In some embodiments, the box may be part of a chassis structure of a vehicle. For example, part of the box may be at least part of the floor of the vehicle, or part of the box may be at least part of a cross beam and longitudinal beam of the vehicle.

In some embodiments, the battery may be an energy storage apparatus. The energy storage apparatus includes an energy storage container, an energy storage cabinet, and the like.

The battery has outstanding advantages such as high energy density, low environmental pollution, high power density, long service life, wide application range, and low self-discharge coefficient, and is an important part of the development of new energy today. The development of battery technology needs to consider multiple design factors at the same time, such as performance parameters including energy density, cycle life, discharge capacity, and charge-discharge rate. In addition, the safety of the battery also needs to be considered.

In battery technology, a battery typically includes a box and a plurality of battery cells disposed in the box. To increase the energy density of the battery, the plurality of battery cells are accommodated in the box in an arranged structure. However, during the continuous charging and discharging of the battery cells in the box, a large amount of heat is generated, resulting in a greater use risk of the battery, and excessively high temperature may affect the use performance of the battery. Therefore, in related technologies, a thermal management system for managing the temperature of the battery cells is typically provided in the box of the battery. The thermal management system typically includes a delivery pipe and a plurality of thermal management components. The plurality of thermal management components are spaced apart in the box, and a thermal management component is disposed between every two adjacent rows of battery cells. The delivery pipe is located on one side of the plurality of battery cells, and the delivery pipe is connected to the plurality of thermal management components, such that the delivery pipe can supply a heat exchange medium to the thermal management components, allowing the thermal management components to exchange heat with the battery cells, thereby regulating the temperature of the battery cells accommodated in the box, and alleviating the phenomenon of the excessively high internal temperature of the battery during use. However, in a battery with such a structure, due to the complex use environment of the battery, the battery is prone to collision or bumping with the external environment during use, and when a collision occurs, the force received by the battery directly acts on the thermal management components and the delivery pipe through the box, easily causing deformation or damage to the thermal management components and the delivery pipe. Especially when a region of the box that undergoes collision deforms or collapses, the region of the box where deformation or collapse occurs directly extrudes the thermal management components and the delivery pipe, leading to rupture or breakage of the thermal management components and the delivery pipe, thus leading to a risk of liquid leakage in the thermal management system of the battery during use, which is not conducive to improving the use reliability and service life of the battery.

Based on the above considerations, to solve the problem of low use reliability and short service life of the battery, an embodiment of this application provides a battery. The battery includes a box, a plurality of battery cell groups, a thermal management component, and a protective member. The box has a first wall in a first direction. The plurality of battery cell groups are all accommodated in the box. The plurality of battery cell groups are arranged along a second direction. The battery cell group includes at least one battery cell. The second direction intersects with the first direction. Along the second direction, the thermal management component is provided between two adjacent battery cell groups. The thermal management component is configured to exchange heat with the battery cell. The protective member is disposed between the first wall and the plurality of battery cell groups along the first direction. The protective member is configured to transmit an external force received by the first wall to the battery cell group so as to protect the thermal management component.

In the battery with such a structure, the protective member is disposed between the first wall of the box and the plurality of battery cell groups, and the protective member is configured to transmit the external force received by the first wall to the battery cell groups, such that when the battery undergoes collision and causes deformation or damage to the first wall, a collision force transmitted from the first wall to the inside of the battery can be distributed to the plurality of battery cell groups through the protective member. This allows the protective member to provide a certain protective effect on the thermal management component, thereby reducing the influence of the collision force generated on the first wall on the thermal management component, alleviating the phenomenon of deformation or damage to the thermal management component due to collision or impact, effectively reducing the risks such as liquid leakage of the thermal management component during use, and helping to improve the use reliability and service life of the battery.

The battery according to this embodiment of this application may be used, but is not limited to, in electric apparatuses such as vehicles, ships, or aircraft. A power supply system of the electric apparatus may include the battery disclosed in this application, which is conducive to alleviating the problem of liquid leakage of the battery during use, thereby improving the use reliability and service life of the battery.

An embodiment of this application provides an electric apparatus using a battery as a power supply. The electric apparatus may be but is not limited to a mobile phone, a tablet, a notebook computer, an electric toy, an electric tool, an electric bicycle, an electric vehicle, a ship, and spacecraft. The electric toy may include a fixed or mobile electric toy, such as a game console, an electric toy car, an electric toy ship toy, or an electric toy aircraft toy. The spacecraft may include airplane, rocket, space shuttle, and spaceship, and the like.

For ease of description, an electric apparatus according to an embodiment of this application being a vehicle is used as an example for description of the following embodiments.

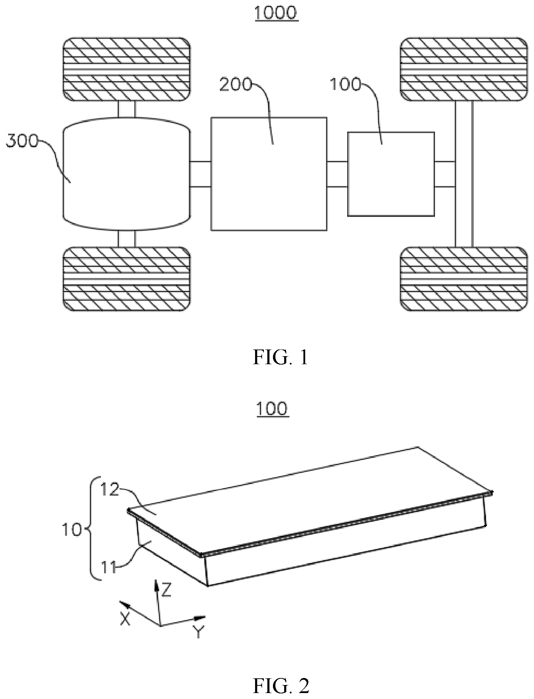

Referring to FIG. 1 and FIG. 2, FIG. 1 is a schematic structural diagram of a vehicle 1000 according to some embodiments of this application, and FIG. 2 is a schematic structural diagram of a battery 100 according to some embodiments of this application. The vehicle 1000 may be a fuel vehicle, a gas vehicle, or a new energy vehicle. The new energy vehicle may be a pure electric vehicle, a hybrid vehicle, or an extended-range vehicle. The vehicle 1000 is internally provided with the battery 100. The battery 100 may be disposed at the bottom of the vehicle 1000, at the front of the vehicle 1000, or at the rear of the vehicle 1000. The battery 100 may be configured to supply power to the vehicle 1000. For example, the battery 100 can serve as an operating power supply or a use power supply of the vehicle 1000. The vehicle 1000 may further include a controller 200 and a motor 300. The controller 200 is configured to control the battery 100 to supply power to the motor 300, for example, to satisfy the power needs of starting, navigation, and driving of the vehicle 1000.

In some embodiments of this application, the battery 100 can not only serve as an operating power supply or a use power supply of the vehicle 1000, but also as a driving power supply of the vehicle 1000, replacing or partially replacing fuel or natural gas to provide traction power to the vehicle 1000.

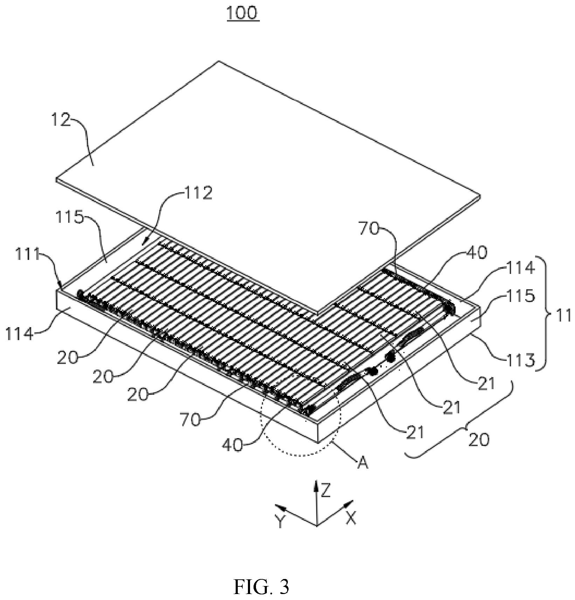

Referring to FIG. 2 and further referring to FIG. 3, FIG. 3 is structural exploded view of a battery 100 according to some embodiments of this application. The battery 100 includes a box 10 and a plurality of battery cell groups 20. The plurality of battery cells 21 are all accommodated in the box 10. Each battery cell group 20 includes a plurality of battery cells 21 arranged along a first direction X, and the plurality of battery cell groups 20 are spaced apart along a second direction Y. Exemplarily, the first direction X and the second direction Y are perpendicular to each other.

The box 10 is configured to provide an assembly space for the battery cell group 20, and the box 10 may adopt various structures. In some embodiments, referring to FIG. 3, the box 10 may include a box body 11 and a box cover 12. The box body 11 is internally provided with an accommodating cavity 112 with an opening 111. The box cover 12 covers the opening 111, such that the box body 11 and the box cover 12 jointly define an assembly space for accommodating the battery cell group 20. The box cover 12 may use various structures. The box cover 12 may be a hollow structure with an opening at one end or a plate-like structure.

Certainly, the box 10 formed by the box body 11 and the box cover 12 may be in various shapes, such as a cylindrical shape, a rectangular shape, or a cuboid shape. Exemplarily, in FIG. 2, the box 10 is rectangular.

In FIG. 3, the box body 11 includes a bottom wall 113, two first walls 114, and two second walls 115. The two first walls 114 are disposed opposite each other along the first direction X. The two second walls 115 are disposed opposite each other along the second direction Y. The bottom wall 113 and the box cover 12 are disposed opposite each other along a third direction Z. One first wall 114, one second wall 115, the other first wall 114, and the other second wall 115 are connected end to end in sequence, such that the two first walls 114 and the two second walls 115 enclose a side wall surrounding the periphery of the bottom wall 113. Ends of the two first walls 114 and the two second walls 115 in the third direction Z are all connected to the bottom wall 113, and the other ends enclose the opening 111 covered by the box cover 12, such that the bottom wall 113, the two first walls 114, and the two second walls 115 jointly define the accommodating cavity 112 for accommodating the battery cell group 20. Exemplarily, the first direction X, the second direction Y, and the third direction Z are perpendicular to each other. The first direction X is a width direction of the battery 100. The second direction Y is a length direction of the battery 100. The third direction Z is a height direction of the battery 100.

Each battery cell group 20 includes a plurality of battery cells 21 arranged along the first direction X, and the plurality of battery cell groups 20 are spaced apart along the second direction Y. That is, a plurality of battery cells 21 arranged in an array are accommodated in the box 10 of the battery 100. A plurality of rows of battery cells 21 spaced apart along the second direction Y are accommodated in the box 10 of the battery 100. Each row of battery cells 21 includes a plurality of battery cells 21 arranged along the first direction X.

In the battery 100, the plurality of battery cells 21 may be connected in series, parallel, or series-parallel. Being connected in series-parallel means a combination of series and parallel connections of the plurality of battery cells 21. The plurality of battery cells 21 may be directly connected in series, parallel, or series-parallel, and then an entirety formed by the plurality of battery cells 21 is accommodated in the box 10. Certainly, the battery 100 may alternatively be formed by a plurality of battery cells 21 being connected in series, parallel, or series-parallel first to form a battery module and then a plurality of battery modules being connected in series, parallel, or series-parallel to form an entirety which is accommodated in the box 10.

In some embodiments, the battery 100 may further include other structures. For example, the battery 100 may further include a bus component. The bus component is configured to connect the plurality of battery cells 21 to achieve electrical connection between the plurality of battery cells 21.

Each battery cell 21 may be a secondary battery or a primary battery, or may be a lithium-sulfur battery, a sodium-ion battery, or a magnesium-ion battery, without being limited thereto. The battery cell 21 may be in a rectangular shape, a cylindrical shape, a prismatic shape, or other shapes. Exemplarily, in FIG. 3, the battery cell 21 is a rectangular structure.

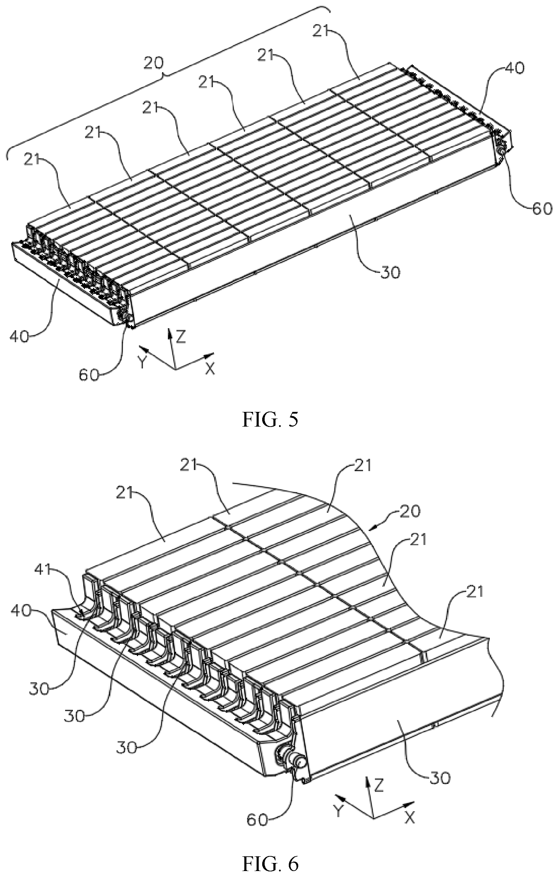

According to some embodiments of this application, referring to FIG. 3, and further referring to FIG. 4, FIG. 5, and FIG. 6, FIG. 4 is a partially enlarged view of portion A of the battery 100 shown in FIG. 3, FIG. 5 is a schematic assembly diagram of a protective member 40 and a battery cell group 20 of a battery 100 according to some embodiments of this application, and FIG. 6 is a schematic partial assembly diagram of a protective member 40 and a battery cell group 20 of a battery 100 according to some embodiments of this application. This application provides a battery 100. The battery 100 includes a box 10, a plurality of battery cell groups 20, a thermal management component 30, and a protective member 40. The box 10 has a first wall 114 along a first direction X. The plurality of battery cell groups 20 are all accommodated in the box 10. The plurality of battery cell groups 20 are arranged along a second direction Y. The battery cell group 20 includes at least one battery cell 21. The second direction Y intersects with the first direction X. Along the second direction Y, a thermal management component 30 is disposed between two adjacent battery cell groups 20. The thermal management component 30 is configured to exchange heat with the battery cell 21. The protective member 40 is disposed between the first wall 114 and the plurality of battery cell groups 20 along the first direction X. The protective member 40 is configured to transmit an external force received by the first wall 114 to the battery cell group 20 so as to protect the thermal management component 30.

The box 10 has a first wall 114 along the first direction X, that is, a wall on a side of the box 10 along the first direction X is the first wall 114. Exemplarily, in FIG. 3, the box 10 includes a box body 11 and a box cover 12. The box body 11 has two opposite first walls 114 along the first direction X, and the plurality of battery cell groups 20 are located between the two first walls 114 along the first direction X.

Along the second direction Y, the thermal management component 30 is disposed between the two adjacent battery cell groups 20, that is, the thermal management component 30 is clamped between the two adjacent battery cell groups 20. The thermal management component 30 is configured to abut against the battery cell 21 of the battery cell group 20 so as to achieve heat exchange with the battery cell 21. Optionally, the thermal management component 30 may be of various structures, such as a harmonica tube or a water-cooling plate.

Referring to FIG. 3, FIG. 4, and FIG. 5, the thermal management component 30 is a plate-like structure. A length direction of the thermal management component 30 is the first direction X. A thickness direction of the thermal management component 30 is the second direction Y. A height direction of the thermal management component 30 is the third direction Z.

Exemplarily, the battery 100 includes a plurality of thermal management components 30. The plurality of thermal management components 30 are spaced apart along the second direction Y. The battery cell group 20 is disposed between every two adjacent thermal management components 30.

Exemplarily, two ends of the thermal management component 30 in the first direction X respectively extend beyond two sides of the plurality of battery cell groups 20, facilitating assembly of the thermal management component 30 with other components, and increasing a contact area between the thermal management component 30 and the battery cell group 20.

The protective member 40 is disposed between the first wall 114 and the plurality of battery cell groups 20 along the first direction X. That is, along the first direction X, the protective member 40 is located between the first wall 114 and the plurality of battery cell groups 20, such that the protective member 40 can separate the first wall 114 and the plurality of battery cell groups 20.

The protective member 40 is configured to transmit the external force received by the first wall 114 to the battery cell group 20 so as to protect the thermal management component 30. That is, when the first wall 114 undergoes collision, the protective member 40 can transmit a collision force received by the first wall 114 to the battery cell group 20, so as to achieve the purpose of the thermal management component 30 being impacted.

Exemplarily, in FIG. 5, two protective members 40 are disposed in the box 10 of the battery 100. The two protective members 40 are respectively located on two sides of the plurality of battery cell groups 20 along the first direction X, and the two protective members 40 are disposed on the two sides of the plurality of battery cell groups 20 in a mirror-symmetrical manner, such that the protective members 40 are disposed between the two first walls 114 and the plurality of battery cell groups 20 so as to protect the two ends of the thermal management component 30 in the first direction X.

Optionally, the protective member 40 may be made of a metal material, such as steel, aluminum, or copper, or may be made of a non-metal insulating material, such as rubber, plastic, or silicone. Exemplarily, the protective member 40 is made of a non-metal insulating material, thereby helping to reduce the risk of short circuit between the battery cell group 20 and the first wall 114.

In these embodiments, the protective member 40 is disposed between the first wall 114 of the box 10 and the plurality of battery cell groups 20, and the protective member 40 is configured to transmit the external force received by the first wall 114 to the battery cell group 20, such that when the battery 100 undergoes collision and causes deformation or damage to the first wall 114, a collision force transmitted from the first wall 114 to the inside of the battery 100 can be distributed to the plurality of battery cell groups 20 through the protective member 40. This enables the protective member 40 to provide a certain protective effect on the thermal management component 30, thereby reducing the influence of the collision force generated on the first wall 114 on the thermal management component 30, alleviating the phenomenon of deformation or damage to the thermal management component 30 due to collision or impact, further effectively reducing the risks such as liquid leakage of the thermal management component 30 during use, and helping to improve the use reliability and service life of the battery 100.

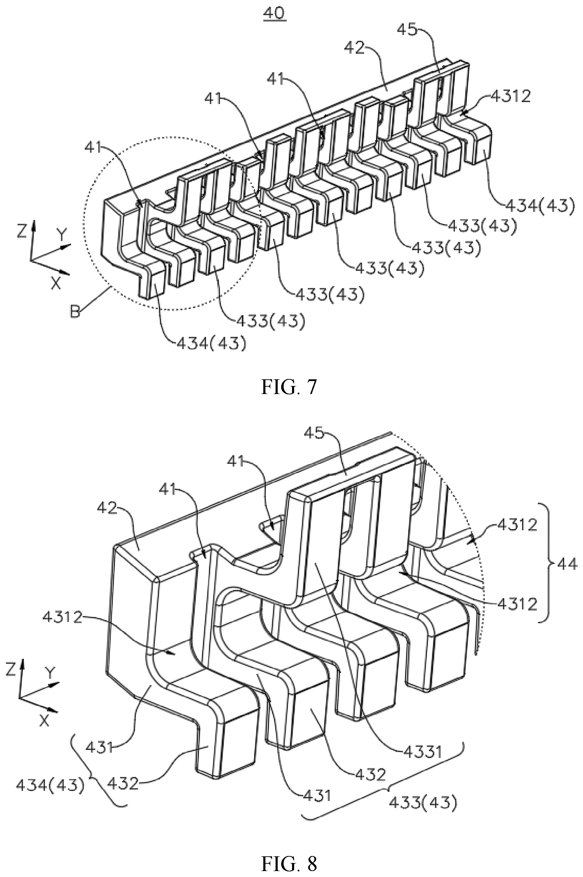

According to some embodiments of this application, referring to FIG. 5 and FIG. 6, and further referring to FIG. 7 and FIG. 8, FIG. 7 is a schematic structural diagram of a protective member 40 of a battery 100 according to some embodiments of this application, and FIG. 8 is a partially enlarged view of portion B of the protective member 40 shown in FIG. 7. Along the first direction X, the protective member 40 abuts against the plurality of battery cell groups 20. A side of the protective member 40 facing the battery cell group 20 is provided with an avoidance groove 41. One end of the thermal management component 30 is disposed in the avoidance groove 41.

The protective member 40 abuts against the plurality of battery cell groups 20, that is, the protective member 40 and the plurality of battery cell groups 20 are structures abutting against each other along the first direction X. The protective member 40 abuts against a battery cell 21 closest to the protective member 40 in the first direction X among the plurality of battery cells 21 of the battery cell group 20. It should be noted that the protective member 40 may directly abut against the plurality of battery cell groups 20 along the first direction X, that is, the protective member 40 is in direct contact with the battery cell group 20. Certainly, the protective member 40 also indirectly abuts against the plurality of battery cell groups 20 along the first direction X, that is, the protective member 40 is a structure in indirect contact with the plurality of battery cell groups 20 through other components.

Optionally, the protective member 40 may be a structure only abutting against the plurality of battery cell groups 20. The protective member 40 may alternatively be a structure both abutting and connected to the plurality of battery cell groups 20. For example, the protective member 40 may be bonded to the plurality of battery cell groups 20. That is, an adhesive tape, an adhesive layer, or the like may be provided between the protective member 40 and the battery cell group 20, such that the protective member 40 and the battery cell group 20 are bonded to each other, and the protective member 40 is a structure indirectly abutting against the battery cell group 20 through a structure such as the adhesive tape, the adhesive layer, or the like.

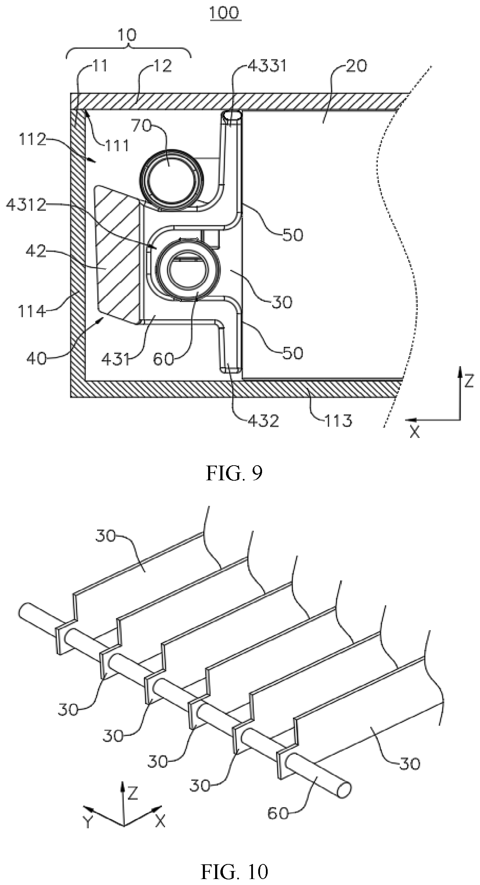

In some embodiments, referring to FIG. 9, FIG. 9 is a partial cross-sectional view of a battery 100 according to some embodiments of this application. Along the first direction X, a bonding member 50 is further disposed between the protective member 40 and the battery cell group 20. The bonding member 50 connects the protective member 40 and the battery cell group 20, such that the protective member 40 is connected to the battery cell 21 closest to the protective member 40 in the first direction X among the plurality of battery cells 21 of the battery cell group 20 through the bonding member 50. The protective member 40 is a structure indirectly abutting against the battery cell group 20 through the bonding member 50.

Exemplarily, the bonding member 50 may be glue, a double-sided tape, or the like provided between the protective member 40 and the battery cell group 20.

The side of the protective member 40 facing the battery cell group 20 is provided with the avoidance groove 41, and one end of the thermal management component 30 is disposed in the avoidance groove 41. That is, the protective member 40 is provided with the avoidance groove 41 on a surface for abutting against the battery cell group 20, and the avoidance groove 41 allows one end of the thermal management component 30 in the first direction X to be inserted, such that the thermal management component 30 is not impacted by the external force during the process of the protective member 40 transmitting the external force received by the first wall 114 to the battery cell group 20.

In some embodiments, in FIG. 6, the battery 100 includes a plurality of thermal management components 30 spaced apart along the second direction Y. Correspondingly, referring to FIG. 6 and FIG. 7, a side of the protective member 40 facing the battery cell group 20 in the first direction X is provided with a plurality of avoidance grooves 41. The plurality of avoidance grooves 41 are spaced apart along the second direction Y. Each avoidance groove 41 allows one end of one thermal management component 30 to be inserted, such that a portion of an end of the thermal management component 30 extending beyond the plurality of battery cell groups 20 in the first direction X can be accommodated in the avoidance groove 41, thereby reducing the influence of the external force received by the first wall 114 on the thermal management component 30.

Exemplarily, in FIG. 8, the avoidance groove 41 runs through two sides of the protective member 40 along the third direction Z, facilitating insertion of the thermal management component 30 into the avoidance groove 41, and facilitating assembly of the protective member 40 between the first wall 114 and the plurality of battery cell groups 20, thereby reducing the assembly difficulty of the battery 100.

In these embodiments, the protective member 40 is configured as a structure abutting against the plurality of battery cell groups 20 along the first direction X, and the side of the protective member 40 facing the battery cell group 20 is provided with the avoidance groove 41 for insertion of the thermal management component 30, such that an external impact force received by the first wall 114 can be directly distributed to the plurality of battery cell groups 20 through the protective member 40, thereby providing a protective effect on the thermal management component 30 through the avoidance groove 41, reducing the phenomenon of the thermal management component 30 being impacted by the external force, helping the protective member 40 to transmit and distribute the external force received by the first wall 114 to the plurality of battery cell groups 20, and achieving the protective effect of the protective member 40 on the thermal management component 30.

According to some embodiments of this application, referring to FIG. 6, FIG. 7, FIG. 8, and FIG. 9, the protective member 40 includes a body portion 42 and a plurality of abutting portions 43. The body portion 42 is disposed between the first wall 114 and the plurality of battery cell groups 20 along the first direction X. The plurality of abutting portions 43 are spaced apart along the second direction Y on a side of the body portion 42 facing the battery cell group 20. Each abutting portion 43 abuts against one battery cell group 20 along the first direction X. The avoidance groove 41 is formed between every two adjacent abutting portions 43.

The plurality of abutting portions 43 are all disposed in a protruding manner on a side of the body portion 42 facing the battery cell group 20 in the first direction X. Optionally, the body portion 42 and the abutting portion 43 may be formed as an integrated structure or formed as separate structures. Exemplarily, in FIG. 7, the body portion 42 and the abutting portion 43 are integrally formed, that is, the body portion 42 and the abutting portion 43 form an integrated structure. That is, the body portion 42 and the abutting portion 43 are formed by an integral forming process such as stamping, casting, or milling. Certainly, in another embodiment, the body portion 42 and the abutting portion 43 may alternatively be formed as separate structures. The abutting portion 43 may be connected to a surface of the side of the body portion 42 facing the battery cell group 20 in the first direction X through structures such as welding, snap-fitting, or bonding.

The plurality of abutting portions 43 are spaced apart along the second direction Y on the side of the body portion 42 facing the battery cell group 20, and the avoidance groove 41 is formed between every two adjacent abutting portions 43. That is, the plurality of abutting portions 43 are structures spaced apart along the second direction Y, such that a gap is formed between every two adjacent abutting portions 43, thus the body portion 42 and two adjacent abutting portions 43 jointly define the avoidance groove 41 for insertion of one end of the thermal management component 30.

Each abutting portion 43 abuts against one battery cell group 20 along the first direction X. That is, the abutting portion 43 and the battery cell group 20 are structures in one-to-one correspondence with each other, and each abutting portion 43 correspondingly abuts against one battery cell group 20 along the first direction X.

It should be noted that, in the embodiments where the battery cell group 20 includes the plurality of battery cells 21 arranged along the first direction X, each abutting portion 43 abuts against a battery cell 21 closest to the abutting portion 43 among the plurality of battery cells 21 of the corresponding battery cell group 20.

In these embodiments, the protective member 40 includes the body portion 42 and the plurality of abutting portions 43 disposed on the side of the body portion 42 facing the battery cell group 20 along the first direction X, and the plurality of abutting portions 43 are spaced apart along the second direction Y, such that the avoidance groove 41 for insertion of the thermal management component 30 can be formed between every two adjacent abutting portions 43, and each abutting portion 43 correspondingly abuts against one battery cell group 20. Thus, when the battery 100 undergoes collision, the external impact force received by the first wall 114 can be distributed to the plurality of battery cell groups 20 through the plurality of abutting portions 43, featuring a simple structure, facilitating assembly, and providing a good protective effect on the thermal management component 30.

In some embodiments, referring to FIG. 6 and FIG. 9, along the first direction X, the thermal management component 30 is spaced apart from the body portion 42. That is, along the first direction X, a gap is formed between the thermal management component 30 and the body portion 42 of the protective member 40, such that the thermal management component 30 does not come into contact with the body portion 42 of the protective member 40 in the first direction X. That is, the thermal management component 30 is spaced apart from a bottom surface of the avoidance groove 41 in the first direction X.

In these embodiments, the thermal management component 30 is configured as a structure having a gap from the body portion 42 of the protective member 40 in the first direction X, such that the thermal management component 30 does not come into contact with the bottom surface of the avoidance groove 41 in the first direction X. Thus, when the first wall 114 undergoes collision, the phenomenon of the protective member 40 transmitting stress to the thermal management component 30 along the first direction X can be reduced. In addition, a buffer space can be formed between the body portion 42 and the thermal management component 30, such that even if the body portion 42 of the protective member 40 deforms, the extrusion of the body portion 42 on the thermal management component 30 can be reduced, helping to further improve the protective effect of the protective member 40 on the thermal management component 30.

According to some embodiments of this application, referring to FIG. 9, the abutting portion 43 is bonded to the corresponding battery cell group 20. That is, the protective member 40 is a structure bonded to the battery cell group 20 through the abutting portion 43.

Along the first direction X, a bonding member 50 is disposed between the abutting portion 43 and the corresponding battery cell group 20. The abutting portion 43 and the corresponding battery cell group 20 are bonded to each other through the bonding member 50, such that the abutting portion 43 is a structure indirectly abutting against the corresponding battery cell group 20 through the bonding member 50.

Exemplarily, the bonding member 50 may be glue, a double-sided tape, or the like provided between the abutting portion 43 and the corresponding battery cell group 20.

In these embodiments, the abutting portion 43 and the corresponding battery cell group 20 are configured as structures bonded to each other, such that the effect of the abutting portion 43 abutting against the battery cell group 20 can be further improved, and the protective member 40 and the battery cell group 20 can form an entirety, thereby facilitating assembly, and improving the effect of the abutting portion 43 transmitting the impact force received by the first wall 114 to the battery cell group 20.

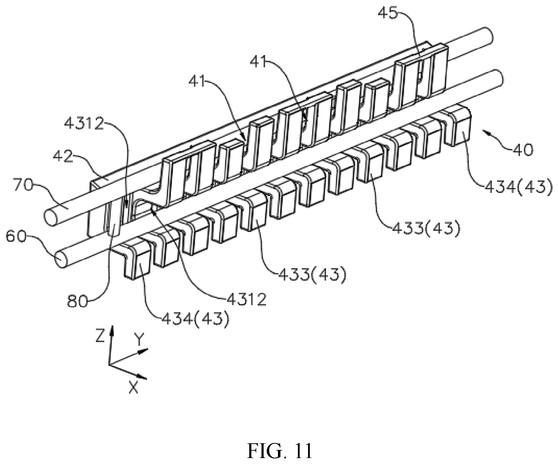

According to some embodiments of this application, referring to FIG. 6, FIG. 8, and FIG. 9, and further referring to FIG. 10 and FIG. 11, FIG. 10 is a schematic assembly diagram of a delivery pipe 60 and a thermal management component 30 according to some embodiments of this application, and FIG. 11 is a schematic assembly diagram of a protective member 40 and a delivery pipe 60 according to some embodiments of this application. The battery 100 includes a plurality of thermal management components 30 spaced apart along the second direction Y. The battery 100 further includes a delivery pipe 60, where the delivery pipe 60 is disposed between the first wall 114 and the plurality of battery cell groups 20 along the first direction X. The delivery pipe 60 extends along the second direction Y. The delivery pipe 60 is connected to the plurality of thermal management components 30. The delivery pipe 60 is configured to supply a heat exchange medium to the thermal management component 30. The abutting portion 43 includes a first portion 431. Along the first direction X, the first portion 431 has a first surface 4311 abutting against the battery cell group 20. The first surface 4311 is provided with an accommodating groove 4312. The accommodating groove 4312 runs through side surfaces of two opposite sides of the first portion 431 along the second direction Y. The delivery pipe 60 is accommodated in the accommodating groove 4312.

The delivery pipe 60 is located between the first wall 114 and the plurality of battery cell groups 20 in the first direction X. The delivery pipe 60 sequentially passes through the plurality of thermal management components 30 along the second direction Y and is connected to the plurality of thermal management components 30. A portion of the thermal management component 30 extending beyond the plurality of battery cell groups 20 in the first direction X is connected to the delivery pipe 60, facilitating connection of two ends of the thermal management component 30 with the delivery pipe 60 respectively.

Exemplarily, the battery 100 includes two delivery pipes 60. The two delivery pipes 60 are respectively located on two sides of the plurality of battery cell groups 20 in the first direction X, such that a delivery pipe 60 is disposed between each of the two first walls 114 and the plurality of battery cell groups 20. One delivery pipe 60 of the two delivery pipes 60 is configured to input a heat exchange medium into the thermal management component 30, and the other delivery pipe 60 is configured for the outflow of the heat exchange medium in the thermal management component 30. Two ends of the thermal management component 30 in the first direction X respectively extend beyond two sides of the plurality of battery cell groups 20, facilitating connection of the two ends of the thermal management component 30 with the two delivery pipes 60 respectively.

The first portion 431 has a first surface 4311 abutting against the battery cell group 20, that is, a surface of the first portion 431 of the abutting portion 43 abutting against the corresponding battery cell group 20 in the first direction X is the first surface 4311.

The first surface 4311 is provided with an accommodating groove 4312, where the accommodating groove 4312 runs through side surfaces of two opposite sides of the first portion 431 along the second direction Y. That is, the first portions 431 of the plurality of abutting portions 43 of the protective member 40 are each provided with the accommodating groove 4312. Each accommodating groove 4312 runs through side surfaces of two opposite sides of the corresponding first portion 431 of the abutting portion 43 along the second direction Y, such that projections of the accommodating grooves 4312 of the first portions 431 of the plurality of abutting portions 43 in the second direction Y at least partially overlap, thus the accommodating grooves 4312 of the first portions 431 of the plurality of abutting portions 43 jointly form an assembly groove 44 extending along the second direction Y. In addition, the delivery pipe 60 is accommodated in the assembly groove 44 along the first direction X, that is, the delivery pipe 60 is accommodated in the accommodating grooves 4312 of the first portions 431 of the plurality of abutting portions 43 along the first direction X.

In these embodiments, the battery 100 is further provided with the delivery pipe 60 configured to deliver the heat exchange medium to the thermal management component 30, and the delivery pipe 60 is a structure extending along the second direction Y, thereby facilitating connection between the delivery pipe 60 and the plurality of thermal management components 30 spaced apart along the second direction Y. The first surfaces 4311 of the first portions 431 of the plurality of abutting portions 43 abutting against the battery cell group 20 are each provided with the accommodating groove 4312. The accommodating groove 4312 is a structure running through the side surfaces of the two opposite sides of the first portion 431 of the abutting portion 43 along the second direction Y, such that the delivery pipe 60 can be accommodated in the accommodating grooves 4312 of the first portions 431 of the plurality of abutting portions 43. Thus, the protective member 40 can also provide a certain protective effect on the delivery pipe 60, such that the external impact force received by the first wall 114 can be distributed to the plurality of battery cell groups 20 through the plurality of abutting portions 43 of the protective member 40, reducing the influence of the collision force generated on the first wall 114 on the delivery pipe 60, thereby effectively alleviating the phenomenon of deformation or damage to the delivery pipe 60 due to collision or impact, reducing the risks such as liquid leakage of the delivery pipe 60 during use, and helping to improve the use reliability and service life of the battery 100. In addition, the delivery pipe 60 and the first portion 431 can share part of the space in the first direction X, helping to increase the internal space utilization of the battery 100.

In some embodiments, referring to FIG. 9, along the first direction X, a depth of the accommodating groove 4312 is greater than an outer diameter of the delivery pipe 60. That is, a distance between the bottom surface of the accommodating groove 4312 and the first surface 4311 in the first direction X is greater than a dimension of the delivery pipe 60 in the first direction X, such that the delivery pipe 60 does not protrude from the first surface 4311 in the first direction X, that is, the delivery pipe 60 can be spaced apart from the battery cell group 20 in the first direction X and also spaced apart from the bottom surface of the accommodating groove 4312 in the first direction X.

In these embodiments, the depth of the accommodating groove 4312 in the first direction X is set to be greater than the outer diameter of the delivery pipe 60, such that after the abutting portion 43 abuts against the battery cell group 20 along the first direction X, a distance between the bottom surface of the accommodating groove 4312 and the battery cell group 20 in the first direction X is greater than the outer diameter of the delivery pipe 60. Thus, the delivery pipe 60 and the bottom surface of the accommodating groove 4312 are structures in clearance fit with each other in the first direction X, and the delivery pipe 60 and at least one of the battery cell groups 20 are structures in clearance fit with each other in the first direction X. This can alleviate the phenomenon of hard contact or hard collision between the delivery pipe 60 and the protective member 40. Thus, when the first wall 114 undergoes collision, the phenomenon of the protective member 40 transmitting stress to the delivery pipe 60 along the first direction X can be reduced. In addition, a buffer space can be formed between the bottom surface of the accommodating groove 4312 and the delivery pipe 60, such that even if the abutting portion 43 deforms, the extrusion of the abutting portion 43 on the delivery pipe 60 can be reduced, helping to further improve the protective effect of the protective member 40 on the delivery pipe 60.

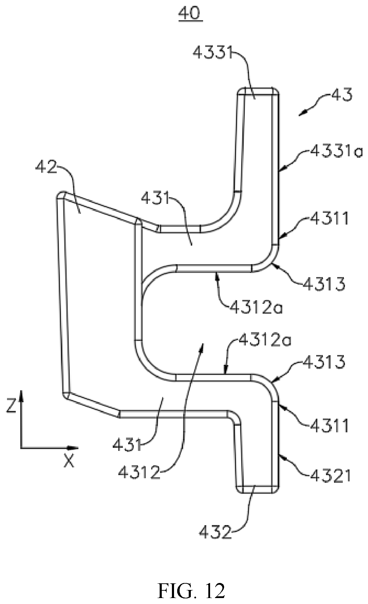

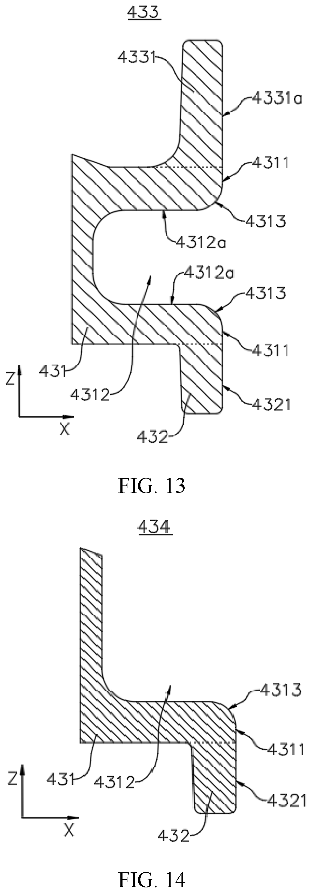

According to some embodiments of this application, referring to FIG. 8 and FIG. 9, and further referring to FIG. 12 and FIG. 13, FIG. 12 is a front view of a protective member 40 of a battery 100 according to some embodiments of this application in a second direction Y, and FIG. 13 is a cross-sectional view of a first abutting portion 433 of a protective member 40 according to some embodiments of this application. The first surface 4311 and a side surface 4312a of the accommodating groove are connected through an arc surface 4313.

The first surface 4311 and the side surface 4312a of the accommodating groove are connected through the arc surface 4313, that is, a rounded corner structure is formed between the first surface 4311 of the first portion 431 and the side surface 4312a of the accommodating groove, such that an arc transition structure is formed between the first surface 4311 of the first portion 431 and the side surface 4312a of the accommodating groove.

In these embodiments, the first surface 4311 of the first portion 431 and the side surface 4312a of the accommodating groove are configured as structures connected through the arc surface 4313, such that the side surface 4312a of the accommodating groove and the first surface 4311 of the first portion 431 are structures with arc transition. Thus, the phenomenon of forming sharp corners between the first surface 4311 and the side surface 4312a of the accommodating groove can be reduced, reducing the risk of the first portion 431 piercing the battery cell 21. In addition, the first portion 431 of the abutting portion 43 can better transmit the external impact force received by the first wall 114 to the battery cell group 20, reducing the phenomenon of stress concentration.

According to some embodiments of this application, referring to FIG. 7, FIG. 8, FIG. 9, and FIG. 12, the abutting portion 43 may further include a second portion 432. The second portion 432 is connected to a side of the first portion 431 in a third direction Z, and the second portion 432 extends along the third direction Z away from the first portion 431. The second portion 432 abuts against the battery cell group 20 along the first direction X. The first direction X, the second direction Y, and the third direction Z are non-coplanar and intersect with each other.

The second portion 432 is connected to the side of the first portion 431 in the third direction Z, and the second portion 432 extends along the third direction Z away from the first portion 431. That is, the second portion 432 is a strip structure extending along the third direction Z, and the second portion 432 is connected to a surface of the side of the first portion 431 in the third direction Z.

Optionally, the first portion 431 and the second portion 432 may be formed as an integrated structure or formed as separate structures. Exemplarily, in FIG. 8, the first portion 431 and the second portion 432 are integrally formed, that is, the first portion 431 and the second portion 432 form an integrated structure. That is, the first portion 431 and the second portion 432 are formed by an integral forming process such as stamping, casting, or milling. Certainly, in another embodiment, the first portion 431 and the second portion 432 may alternatively be formed as separate structures. The second portion 432 may be connected to the surface of the side of the first portion 431 in the third direction Z through structures such as welding, snap-fitting, or bonding.

Exemplarily, in FIG. 9, the second portion 432 is connected to a side of the first portion 431 away from the box cover 12 in the third direction Z.

The second portion 432 abuts against the battery cell group 20 along the first direction X, that is, both the first portion 431 and the second portion 432 of the abutting portion 43 are structures abutting against the corresponding battery cell group 20 along the first direction X. Exemplarily, in FIG. 12 and FIG. 13, the second portion 432 has a second surface 4321 abutting against the battery cell group 20 in the first direction X. The second surface 4321 of the second portion 432 is coplanar with the first surface 4311 of the first portion 431, thereby helping to improve the effect of both the first portion 431 and the second portion 432 abutting against the battery cell group 20.

In these embodiments, the abutting portion 43 is further provided with the second portion 432 connected to the side of the first portion 431 in the third direction Z. The second portion 432 extends along the third direction Z and abuts against the battery cell group 20 along the first direction X, such that both the first portion 431 and the second portion 432 of the abutting portion 43 are structures abutting against the battery cell group 20, helping to increase a contact area between the abutting portion 43 and the battery cell group 20, and increasing a stress area of the battery cell group 20, thereby alleviating the phenomenon of excessive concentration of force on the battery cell group 20 when the abutting portion 43 transmits the external impact force received by the first wall 114 to the battery cell group 20, and reducing the risk of the battery cell 21 of the battery cell group 20 being crushed.

According to some embodiments of this application, referring to FIG. 8, FIG. 9, FIG. 12, and FIG. 13, the plurality of abutting portions 43 include a first abutting portion 433. The first abutting portion 433 further includes a third portion 4331. The third portion 4331 is connected to a side of the first portion 431 facing away from the second portion 432 in the third direction Z. The third portion 4331 extends along the third direction Z away from the first portion 431, and the third portion 4331 abuts against the battery cell group 20 along the first direction X.

The plurality of abutting portions 43 include the first abutting portion 433, that is, the plurality of abutting portions 43 include at least one first abutting portion 433. Exemplarily, in FIG. 7, the plurality of abutting portions 43 include a plurality of first abutting portions 433 and two second abutting portions 434. Two abutting portions 43 located at two ends in the second direction Y among the plurality of abutting portions 43 are the second abutting portions 434. The plurality of first abutting portions 433 are located between the two second abutting portions 434 in the second direction Y.

The third portion 4331 is connected to the side of the first portion 431 facing away from the second portion 432 in the third direction Z, and the third portion 4331 extends along the third direction Z away from the first portion 431. That is, the third portion 4331 is a strip structure extending along the third direction Z, and the third portion 4331 is connected to a surface of the side of the first portion 431 facing away from the second portion 432 in the third direction Z.

Exemplarily, in FIG. 9, the third portion 4331 is connected to a side of the first portion 431 facing the box cover 12 in the third direction Z.

The third portion 4331 abuts against the battery cell group 20 along the first direction X, that is, the first portion 431, the second portion 432, and the third portion 4331 of the first abutting portion 433 are all structures abutting against the corresponding battery cell group 20 in the first direction X. Exemplarily, in FIG. 12 and FIG. 13, the third portion 4331 has a third surface 4331a abutting against the battery cell group 20 in the first direction X. The third surface 4331a of the third portion 4331 is coplanar with the first surface 4311 of the first portion 431, thereby helping to improve the effect of both the first portion 431 and the third portion 4331 abutting against the battery cell group 20.

Optionally, the first portion 431 and the third portion 4331 may be formed as an integrated structure or formed as separate structures. Exemplarily, in FIG. 8, the first portion 431 and the third portion 4331 are integrally formed, that is, the first portion 431 and the third portion 4331 form an integrated structure. That is, the first portion 431 and the third portion 4331 are formed by an integral forming process such as stamping, casting, or milling. Certainly, in another embodiment, the first portion 431 and the third portion 4331 may alternatively be formed as separate structures. The third portion 4331 may be connected to the surface of the side of the first portion 431 facing away from the second portion 432 in the third direction Z through structures such as welding, snap-fitting, or bonding.

In these embodiments, the plurality of abutting portions 43 further include the first abutting portion 433. The first abutting portion 433 is further provided with the third portion 4331 connected to the side of the first portion 431 facing away from the second portion 432 in the third direction Z. The third portion 4331 extends along the third direction Z and abuts against the battery cell group 20 along the first direction X, such that the first portion 431, the second portion 432, and the third portion 4331 of the first abutting portion 433 are all structures abutting against the battery cell group 20. This helps to further increase a contact area between the first abutting portion 433 and the battery cell group 20, further increasing a stress area of the corresponding battery cell group 20, thereby alleviating the phenomenon of excessive concentration of force on the battery cell group 20 when the first abutting portion 433 transmits the external impact force received by the first wall 114 to the corresponding battery cell group 20, and reducing the risk of the battery cell 21 of the battery cell group 20 being crushed.

According to some embodiments of this application, referring to FIG. 7 and FIG. 8, the protective member 40 may further include a reinforcing portion 45. The reinforcing portion 45 is connected to the third portions 4331 of at least two first abutting portions 433.

Exemplarily, in FIG. 7, the reinforcing portion 45 is configured to be connected to the third portions 4331 of two adjacent first abutting portions 433, and the reinforcing portion 45 is connected between the third portions 4331 of at least one group of two adjacent first abutting portions 433.

Exemplarily, referring to FIG. 7, each protective member 40 is provided with three reinforcing portions 45. The three reinforcing portions 45 are spaced apart along the second direction Y. Each reinforcing portion 45 is connected to the third portions 4331 of one group of two adjacent first abutting portions 433. Certainly, in another embodiment, the number of reinforcing portions 45 disposed on each protective member 40 may alternatively be one, two, four, five, or the like.

Optionally, the reinforcing portion 45 and the third portion 4331 may be formed as an integrated structure or formed as separate structures. Exemplarily, in FIG. 8, the reinforcing portion 45 and the third portion 4331 are integrally formed, that is, the reinforcing portion 45 and the third portion 4331 form an integrated structure. That is, the reinforcing portion 45 and the third portion 4331 are formed by an integral forming process such as stamping, casting, or milling. Certainly, in another embodiment, the reinforcing portion 45 and the third portion 4331 may alternatively be formed as separate structures. The reinforcing portion 45 may be connected to the third portion 4331 through structures such as welding, snap-fitting, or bonding.

In these embodiments, the protective member 40 is further provided with the reinforcing portion 45, where the reinforcing portion 45 is connected to the third portions 4331 of at least two first abutting portions 433. This can improve the structural strength and structural stability of the first abutting portions 433 spaced apart along the second direction Y. In addition, this can identify a mounting direction of the protective member 40 along the third direction Z through the reinforcing portion 45, achieving an anti-error design, thereby helping to reduce assembly errors of the protective member 40 when assembled into the box 10.

In some embodiments, still referring to FIG. 7 and FIG. 8, along the third direction Z, the reinforcing portion 45 is connected to an end of the third portion 4331 away from the first portion 431.

In these embodiments, the reinforcing portion 45 is disposed at the end of the third portion 4331 away from the first portion 431 in the third direction Z. This can reduce the interference influence between the reinforcing portion 45 and the thermal management component 30 disposed in the avoidance groove 41, reducing the phenomenon of extrusion or damage to the thermal management component 30 by the reinforcing portion 45. In addition, this facilitates the assembly of the protective member 40 between the first wall 114 and the plurality of battery cell groups 20, helping to reduce the assembly difficulty of the protective member 40.

According to some embodiments of this application, referring to FIG. 3, FIG. 8, and FIG. 9, the box 10 may include a box body 11 and a box cover 12. The box body 11 is internally provided with an accommodating cavity 112 with an opening 111. The accommodating cavity 112 is configured to accommodate the plurality of battery cell groups 20. The opening 111 is provided on a side of the box body 11 in the third direction Z, and the box body 11 has the first wall 114 in the first direction X. The box cover 12 covers the opening 111. Along the third direction Z, the third portion 4331 is connected to a side of the first portion 431 facing the box cover 12.

The box body 11 has the first wall 114 along the first direction X, that is, a wall on a side of the box body 11 along the first direction X is the first wall 114. Exemplarily, in FIG. 3, the box body 11 includes a bottom wall 113, two first walls 114, and two second walls 115. The bottom wall 113 and the end cover are disposed opposite each other along the third direction Z. The two first walls 114 are disposed opposite each other along the first direction X. The two second walls 115 are disposed opposite each other along the second direction Y. One first wall 114, one second wall 115, the other first wall 114, and the other second wall 115 are connected end to end in sequence, such that the two first walls 114 and the two second walls 115 enclose a side wall surrounding the periphery of the bottom wall 113. Ends of the two first walls 114 and the two second walls 115 in the third direction Z are all connected to the bottom wall 113, and the other ends enclose the opening 111 covered by the box cover 12, such that the bottom wall 113, the two first walls 114, and the two second walls 115 jointly define the accommodating cavity 112 for accommodating the battery cell group 20.

Along the third direction Z, the third portion 4331 is connected to the side of the first portion 431 facing the box cover 12, that is, the third portion 4331 of the first abutting portion 433 is located on the side of the first portion 431 facing the box cover 12 in the third direction Z, such that the second portion 432 is located on a side of the first portion 431 facing away from the box cover 12 in the third direction Z. Correspondingly, the reinforcing portion 45 is connected to an end of the third portion 4331 close to the box cover 12 in the third direction Z, thereby facilitating the assembly of the protective member 40 between the first wall 114 and the plurality of battery cell groups 20 at the opening 111 of the box body 11 along the third direction Z, and allowing one end of the thermal management component 30 to be correspondingly disposed in the avoidance groove 41 formed between the two adjacent abutting portions 43 during the process of assembling the protective member 40 between the first wall 114 and the plurality of battery cell groups 20 along the third direction Z.

Exemplarily, along the third direction Z, the thermal management component 30 and the reinforcing portion 45 are spaced apart.

In these embodiments, the box 10 is provided with the box body 11 and the box cover 12. The opening 111 is formed on the side of the box body 11 in the third direction Z. The box cover 12 covers the opening 111 of the box body 11 to accommodate the plurality of battery cell groups 20. The third portion 4331 of the first abutting portion 433 is disposed on the side of the first portion 431 of the first abutting portion 433 facing the box cover 12 in the third direction Z, such that the reinforcing portion 45 is a structure located on the side of the first portion 431 facing the box cover 12 in the third direction Z. This facilitates the assembly of the protective member 40 between the first wall 114 and the plurality of battery cell groups 20 along the third direction Z, helping to reduce the assembly difficulty of the protective member 40. In addition, this facilitates direct observation of the reinforcing portion 45 from the opening 111 of the box body 11, facilitating identification of the mounting direction of the protective member 40 along the third direction Z.

According to some embodiments of this application, referring to FIG. 3, FIG. 4, FIG. 9, and FIG. 11, the battery 100 may further include a main pipe 70 and a plurality of connection pipes 80. The main pipe 70 is disposed between the first wall 114 and the plurality of battery cell groups 20 along the first direction X, and the main pipe 70 extends along the second direction Y. The plurality of connection pipes 80 are spaced apart along the second direction Y, and the connection pipes 80 connect the main pipe 70 and the delivery pipe 60. The main pipe 70 is configured to supply the heat exchange medium to the delivery pipe 60.

Exemplarily, the battery 100 includes two main pipes 70. The two main pipes 70 are respectively located on two sides of the plurality of battery cell groups 20 in the first direction X, such that the main pipe 70 is disposed between each of the two first walls 114 and the plurality of battery cell groups 20. The main pipe 70 and the delivery pipe 60 are in one-to-one correspondence with each other. Each main pipe 70 is connected to the corresponding delivery pipe 60 through a plurality of connection pipes 80. One main pipe 70 of the two main pipes 70 is configured to input the heat exchange medium into the delivery pipe 60, and the other main pipe 70 is configured for the outflow of the heat exchange medium in the delivery pipe 60, thereby achieving heat exchange between the thermal management component 30 and the battery cell 21.

Certainly, in another embodiment, the battery 100 may alternatively be not provided with the main pipe 70 and the connection pipe 80. The delivery pipe 60 may be directly connected to an apparatus outside the battery 100 for storing the heat exchange medium.

The plurality of connection pipes 80 are spaced apart along the second direction Y, and the connection pipes 80 connect the main pipe 70 and the delivery pipe 60. That is, the plurality of connection pipes 80 are structures spaced apart along the second direction Y on the main pipe 70, such that different positions of the main pipe 70 in the second direction Y are all connected to the connection pipes 80, and different positions of the delivery pipe 60 in the second direction Y are all connected to the main pipe 70 through the connection pipes 80.

In these embodiments, the battery 100 is further provided with the main pipe 70 and the plurality of connection pipes 80, the main pipe 70 is a structure extending along the second direction Y, and the plurality of connection pipes 80 are structures spaced apart along the second direction Y on the main pipe 70, such that the main pipe 70 is a structure in spaced connection with the delivery pipe 60 through the plurality of connection pipes 80. This allows the main pipe 70 to form a plurality of delivery points for providing the heat exchange medium on the delivery pipe 60 through the plurality of connection pipes 80, helping to improve the uniformity of the flow rate and pressure of the heat exchange medium at various positions inside the delivery pipe 60 in the second direction Y, thereby making the flow rate and pressure of the heat exchange medium supplied by the delivery pipe 60 to the plurality of thermal management components 30 relatively uniform, making the heat exchange capabilities between the plurality of thermal management components 30 similar, and helping to alleviate the phenomenon of local temperature rise in the plurality of battery cell groups 20 inside the battery 100.

In some embodiments, referring to FIG. 9 and FIG. 11, along the third direction Z, the main pipe 70 is located on one side of the first portion 431. The first direction X, the second direction Y, and the third direction Z are non-coplanar and intersect with each other.

The main pipe 70 can be located on the side of the first portion 431 facing the box cover 12 in the third direction Z, or on the side of the first portion 431 facing away from the box cover 12 along the third direction Z. Exemplarily, in FIG. 9, the main pipe 70 is disposed on the side of the first portion 431 facing the box cover 12 in the third direction Z, thereby facilitating assembly and maintenance of the main pipe 70 at the opening 111 of the box body 11.

In these embodiments, the main pipe 70 is disposed on one side of the first portion 431 in the third direction Z. This facilitates the assembly of the main pipe 70, helps to reduce the assembly difficulty of the main pipe 70, and allows the main pipe 70 and the first portion 431 to share part of the space in the first direction X, helping to increase the internal space utilization of the battery 100. In addition, this can implement mutual separation between the delivery pipe 60 and the main pipe 70, helping to reduce the interference influence and extrusion between the main pipe 70 and the delivery pipe 60.

According to some embodiments of this application, referring to FIG. 8, FIG. 9, and FIG. 11, the plurality of abutting portions 43 may include a first abutting portion 433. The first abutting portion 433 further includes a third portion 4331. The third portion 4331 is connected to a side of the first portion 431 facing the main pipe 70 in the third direction Z. The third portion 4331 extends along the third direction Z away from the first portion 431. The third portion 4331 abuts against the battery cell group 20 along the first direction X. Along the first direction X, the main pipe 70 is located between the first wall 114 and the third portion 4331.

The third portion 4331 is connected to the side of the first portion 431 facing the main pipe 70 in the third direction Z, and the third portion 4331 extends along the third direction Z away from the first portion 431. That is, the third portion 4331 is a strip structure extending along the third direction Z, and the third portion 4331 is connected to a surface of the side of the first portion 431 facing the main pipe 70 in the third direction Z.

Exemplarily, the main pipe 70 is disposed on the side of the first portion 431 facing the box cover 12. Correspondingly, the third portion 4331 is connected to the side of the first portion 431 facing the box cover 12.

Along the first direction X, the main pipe 70 is located between the first wall 114 and the third portion 4331, that is, an accommodating space for accommodating the main pipe 70 is formed between the third portion 4331 of the first abutting portion 433 and the first wall 114 of the box body 11.

In these embodiments, the plurality of abutting portions 43 further include the first abutting portion 433. The first abutting portion 433 is further provided with the third portion 4331 connected to the side of the first portion 431 facing the main pipe 70 in the third direction Z. The third portion 4331 extends along the third direction Z and abuts against the battery cell group 20 along the first direction X. The main pipe 70 is disposed between the first wall 114 and the third portion 4331 in the first direction X, such that the protective member 40 can also provide a certain protective effect on the main pipe 70, allowing the external impact force received by the first wall 114 to be directly distributed to the plurality of battery cell groups 20 through the plurality of abutting portions 43 of the protective member 40, thereby reducing the influence of the collision force generated on the first wall 114 on the main pipe 70, alleviating the phenomenon of deformation or damage to the main pipe 70 due to collision or impact, effectively reducing the risks such as liquid leakage of the main pipe 70 during use, and helping to improve the use reliability and service life of the battery 100.

In some embodiments, referring to FIG. 9, along the first direction X, a minimum distance between the first wall 114 and the third portion 4331 is greater than an outer diameter of the main pipe 70. That is, the minimum distance between the first wall 114 and the third portion 4331 of the first abutting portion 433 in the first direction X is greater than a dimension of the main pipe 70 in the first direction X. That is, the main pipe 70 can be spaced apart from the third portion 4331 in the first direction X and can also be spaced apart from the first wall 114 in the first direction X.

In these embodiments, the minimum distance between the first wall 114 and the third portion 4331 in the first direction X is set to be greater than the outer diameter of the main pipe 70, such that the main pipe 70 and the first wall 114 are structures in clearance fit with each other in the first direction X, and the main pipe 70 and at least one of the third portion 4331 are structures in clearance fit with each other in the first direction X. This can alleviate the phenomenon of hard contact or hard collision between the main pipe 70 and the first wall 114. Thus, when the first wall 114 undergoes collision, the phenomenon of the protective member 40 transmitting stress to the main pipe 70 along the first direction X can be reduced. In addition, a buffer space can be formed between the first wall 114 and the main pipe 70, such that even if the first wall 114 deforms, the extrusion of the first wall 114 on the main pipe 70 can be reduced, helping to further improve the protective effect of the protective member 40 on the main pipe 70.

According to some embodiments of this application, referring to FIG. 7, FIG. 8, and FIG. 11, and further referring to FIG. 14, FIG. 14 is a cross-sectional view of a second abutting portion 434 of a protective member 40 according to some embodiments of this application. The plurality of abutting portions 43 may further include a second abutting portion 434. Along the third direction Z, the accommodating groove 4312 of the second abutting portion 434 runs through a side of the first portion 431 of the second abutting portion 434 facing the main pipe 70. The second abutting portion 434 is in one-to-one correspondence with the connection pipe 80. The connection pipe 80 is disposed in the accommodating groove 4312 of the second abutting portion 434.

The second abutting portion 434 is in one-to-one correspondence with the connection pipe 80, that is, an abutting portion 43 at a position corresponding to the connection pipe 80 among the plurality of abutting portions 43 is the second abutting portion 434. Exemplarily, in FIG. 11, two abutting portions 43 located at two ends in the second direction Y among the plurality of abutting portions 43 are both second abutting portions 434. The abutting portions 43 located between two second abutting portions 434 among the plurality of abutting portions 43 are all first abutting portions 433. Correspondingly, the connection pipes 80 are correspondingly disposed at two ends of each protective member 40.

Along the third direction Z, the accommodating groove 4312 of the second abutting portion 434 runs through the side of the first portion 431 of the second abutting portion 434 facing the main pipe 70. That is, referring to FIG. 11 and FIG. 14, the accommodating groove 4312 provided on the first surface 4311 of the first portion 431 of the second abutting portion 434 extends along the third direction Z to a surface of the side of the first portion 431 facing the main pipe 70, such that a notch for insertion of the connection pipe 80 is formed on the side of the first portion 431 of the first abutting portion 433 facing the main pipe 70 along the third direction Z, allowing the connection pipe 80 to be inserted into the accommodating groove 4312 from the side of the first portion 431 of the first abutting portion 433 facing the main pipe 70 along the third direction Z, thereby achieving connection of the connection pipe 80 to the delivery pipe 60 and the main pipe 70, eliminating the need to set the connection pipe 80 as a special-shaped structure to bypass the abutting portion 43, and helping to reduce the manufacturing difficulty and assembly difficulty of the connection pipe 80.

In these embodiments, the abutting portion 43 at the position corresponding to the connection pipe 80 among the plurality of abutting portions 43 is the second abutting portion 434, and the accommodating groove 4312 of the second abutting portion 434 runs through the side of the first portion 431 facing the main pipe 70 along the third direction Z, such that the connection pipe 80 can be disposed in the accommodating groove 4312 along the third direction Z and connect the delivery pipe 60 and the main pipe 70. This helps to reduce the difficulty of the connection pipe 80 in connecting the delivery pipe 60 and the main pipe 70, thereby reducing the assembly difficulty of the battery 100. In addition, this allows the connection pipe 80 to be a structure accommodated in the accommodating groove 4312, such that the protective member 40 can also provide a certain protective effect on the connection pipe 80, allowing the external impact force received by the first wall 114 to be directly distributed to the plurality of battery cell groups 20 through the plurality of abutting portions 43 of the protective member 40, thereby reducing the influence of the collision force generated on the first wall 114 on the connection pipe 80, alleviating the phenomenon of deformation or damage to the connection pipe 80 due to collision or impact, effectively reducing the risks such as liquid leakage of the connection pipe 80 during use, and helping to improve the use reliability and service life of the battery 100.

According to some embodiments of this application, referring to FIG. 9, along the first direction X, the protective member 40 is spaced apart from the first wall 114. That is, a gap is formed between the protective member 40 and the first wall 114 in the first direction X, such that the body portion 42 of the protective member 40 does not come into contact with the first wall 114 in the first direction X.

In these embodiments, the protective member 40 and the first wall 114 of the box 10 are configured to be spaced apart along the first direction X, such that the protective member 40 and the first wall 114 are structures in clearance fit with each other. This facilitates the assembly of the protective member 40 between the first wall 114 and the plurality of battery cell groups 20, helping to reduce the assembly difficulty of the protective member 40. In addition, this allows a certain buffer space to be formed between the first wall 114 and the protective member 40, reducing the phenomenon of the stress of the first wall 114 continuously acting on the battery cell group 20 through the protective member 40.

According to some embodiments of this application, referring to FIG. 7, FIG. 8, FIG. 9, and FIG. 11, the battery 100 may further include a delivery pipe 60. The delivery pipe 60 is disposed between the first wall 114 and the plurality of battery cell groups 20 along the first direction X. The delivery pipe 60 extends along the second direction Y. The delivery pipe 60 is connected to the thermal management component 30. The delivery pipe 60 is configured to supply a heat exchange medium to the thermal management component 30. A side of the protective member 40 facing the battery cell group 20 in the first direction X is provided with an assembly groove 44. The assembly groove 44 runs through the protective member 40 along the second direction Y. The delivery pipe 60 is accommodated in the assembly groove 44.

In these embodiments, the battery 100 is further provided with the delivery pipe 60 configured to deliver the heat exchange medium to the thermal management component 30, and the delivery pipe 60 is a structure extending along the second direction Y, thereby facilitating mutual connection between the delivery pipe 60 and the thermal management component 30. The side of the protective member 40 facing the battery cell group 20 in the first direction X is provided with the assembly groove 44, and the assembly groove 44 is a structure running through the protective member 40 along the second direction Y, such that the delivery pipe 60 can be accommodated in the assembly groove 44 of the protective member 40. Thus, the protective member 40 can provide a certain protective effect on the delivery pipe 60, such that the external impact force received by the first wall 114 can be directly distributed to the plurality of battery cell groups 20 through the protective member 40, reducing the influence of the collision force generated on the first wall 114 on the delivery pipe 60, thereby effectively alleviating the phenomenon of deformation or damage to the delivery pipe 60 due to collision or impact, reducing the risks such as liquid leakage of the delivery pipe 60 during use, and helping to improve the use reliability and service life of the battery 100. In addition, the delivery pipe 60 and the protective member 40 can share part of the space in the first direction X, helping to increase the internal space utilization of the battery 100.

In some embodiments, continuing to refer to FIG. 7, FIG. 8, FIG. 9, and FIG. 11, the protective member 40 may include a plurality of abutting portions 43 spaced apart along the second direction Y. An avoidance groove 41 is formed between every two adjacent abutting portions 43. One end of the thermal management component 30 is disposed in the avoidance groove 41. Each abutting portion 43 abuts against one battery cell group 20 along the first direction X. Along the first direction X, a side of the abutting portion 43 facing the battery cell group 20 is provided with an accommodating groove 4312. The accommodating groove 4312 runs through the abutting portion 43 along the second direction Y. The accommodating grooves 4312 of the plurality of abutting portions 43 form an assembly groove 44.

The accommodating grooves 4312 of the plurality of abutting portions 43 form the assembly groove 44, that is, projections of the accommodating grooves 4312 of the plurality of abutting portions 43 in the second direction Y at least partially overlap, such that the accommodating grooves 4312 of the plurality of abutting portions 43 jointly form the assembly groove 44 extending along the second direction Y, allowing the delivery pipe 60 to be accommodated in the assembly groove 44 along the first direction X.

It should be noted that, in these embodiments where the protective member 40 is not provided with the abutting portion 43 and the protective member 40 is a plate-like structure, correspondingly, the assembly groove 44 is a groove provided on a side of the protective member 40 facing the battery cell group 20, and the groove is a structure extending along the second direction Y and running through two ends of the protective member 40.

In these embodiments, the protective member 40 includes a plurality of abutting portions 43 spaced apart along the second direction Y. Each abutting portion 43 correspondingly abuts against one battery cell group 20. The avoidance groove 41 for insertion of the thermal management component 30 is formed between every two adjacent abutting portions 43, such that when the battery 100 undergoes collision, the collision force received by the first wall 114 can be distributed to the plurality of battery cell groups 20 through the plurality of abutting portions 43, reducing the phenomenon of the thermal management component 30 being impacted by the external force. The accommodating groove 4312 is provided on a side of the abutting portion 43 abutting against the battery cell group 20 along the first direction X, and the accommodating groove 4312 is a structure running through the abutting portion 43 along the second direction Y, such that the accommodating grooves 4312 of the plurality of abutting portions 43 jointly form the assembly groove 44 for accommodating the delivery pipe 60, thereby allowing the protective member 40 to provide a good protective effect on both the thermal management component 30 and the delivery pipe 60, featuring a simple structure, and facilitating manufacturing and assembly.

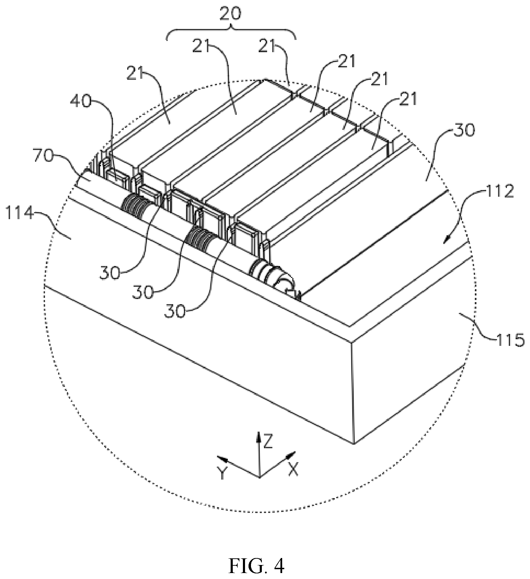

According to some embodiments of this application, referring to FIG. 3 and FIG. 4, along the first direction X, the box 10 has two opposite first walls 114. The plurality of battery cell groups 20 are located between the two first walls 114. The battery 100 includes two protective members 40. The two protective members 40 are disposed opposite each other along the first direction X, and the two protective members 40 are respectively located between the two first walls 114 and the plurality of battery cell groups 20.

The two protective members 40 are disposed opposite each other along the first direction X, that is, the two protective members 40 are structures respectively disposed on two sides of the plurality of battery cell groups 20 in a mirror-symmetrical manner.

It should be noted that, in the embodiments where the battery 100 includes two delivery pipes 60 and two main pipes 70, each delivery pipe 60 and each main pipe 70 are assembled to the corresponding protective member 40.

In these embodiments, the box 10 has the two first walls 114 disposed opposite each other in the first direction X. The two first walls 114 are respectively located on two sides of the plurality of battery cell groups 20 in the first direction X. One protective member 40 is disposed between each first wall 114 and the plurality of battery cell groups 20, such that the two protective members 40 can protect two ends of the thermal management component 30 in the first direction X. This helps to further improve the protective effect on the thermal management component 30, reducing the phenomenon of the collision forces generated on the two first walls 114 on two sides of the box 10 in the first direction X directly acting on the thermal management component 30, thereby further alleviating the situation of deformation or damage to the thermal management component 30 due to collision or impact, further reducing the risks such as liquid leakage of the thermal management component 30 during use, and further improving the use reliability and service life of the battery 100.

According to some embodiments of this application, this application further provides an electric apparatus. The electric apparatus includes the battery 100 in any one of the foregoing solutions, where the battery 100 is configured to supply electrical energy to the electric apparatus.

The electric apparatus may be the device or system using the battery 100 in any one of the foregoing applications.

According to some embodiments of this application, referring to FIG. 2 to FIG. 14, this application provides a battery 100. The battery 100 includes a box 10, a plurality of battery cell groups 20, a plurality of thermal management components 30, two delivery pipes 60, two main pipes 70, a plurality of connection pipes 80, and two protective members 40. The box 10 includes a box body 11 and a box cover 12. The box body 11 is internally provided with an accommodating cavity 112 with an opening 111. The opening 111 is provided on a side of the box body 11 in a third direction Z. The box body 11 has two first walls 114 disposed opposite each other in a first direction X. The box cover 12 covers the opening 111. The plurality of battery cell groups 20 are spaced apart along a second direction Y in the accommodating cavity 112. Each battery cell group 20 includes a plurality of battery cells 21 arranged along the first direction X. The first direction X, the second direction Y, and the third direction Z are perpendicular to each other. The plurality of thermal management components 30 are spaced apart along the second direction Y in the accommodating cavity 112. The thermal management component 30 is disposed between every two adjacent battery cell groups 20. The thermal management component 30 is configured to exchange heat with the battery cell 21. Along the first direction X, two ends of the thermal management component 30 respectively extend beyond two sides of the plurality of battery cell groups 20. The two delivery pipes 60 are respectively disposed on the two sides of the plurality of battery cell groups 20 along the first direction X. The delivery pipe 60 is located between the first wall 114 and the plurality of battery cell groups 20. The delivery pipe 60 extends along the second direction Y. The delivery pipe 60 passes through the plurality of thermal management components 30 along the second direction Y and is connected to the plurality of thermal management components 30. The delivery pipe 60 is configured to supply a heat exchange medium to the thermal management component 30. The two main pipes 70 are respectively disposed on the two sides of the plurality of battery cell groups 20 along the first direction X. The main pipe 70 is located between the first wall 114 and the plurality of battery cell groups 20. The main pipe 70 extends along the second direction Y. Each main pipe 70 is connected to a plurality of connection pipes 80. The plurality of connection pipes 80 are spaced apart along the second direction Y on the main pipe 70. The connection pipe 80 connects the main pipe 70 and the delivery pipe 60. The main pipe 70 is configured to supply a heat exchange medium to the delivery pipe 60. The two protective members 40 are disposed opposite each other along the first direction X. The two protective members 40 are respectively located between the two first walls 114 and the plurality of battery cell groups 20. The protective member 40 is spaced apart from the first wall 114 along the first direction X. The protective member 40 includes a body portion 42 and a plurality of abutting portions 43. The body portion 42 is disposed between the first wall 114 and the plurality of battery cell groups 20 along the first direction X. The plurality of abutting portions 43 are spaced apart along the second direction Y on a side of the body portion 42 facing the battery cell group 20. Each abutting portion 43 abuts against one battery cell group 20 along the first direction X and is bonded to the battery cell group 20. An avoidance groove 41 is formed between every two adjacent abutting portions 43. Along the first direction X, one end of the thermal management component 30 is disposed in the avoidance groove 41. The thermal management component 30 is spaced apart from the body portion 42. The abutting portion 43 includes a first portion 431 and a second portion 432. The first portion 431 abuts against the corresponding battery cell group 20 along the first direction X. The first portion 431 has a first surface 4311 abutting against the battery cell group 20. The first surface 4311 is provided with an accommodating groove 4312. Along the second direction Y, the accommodating groove 4312 runs through side surfaces of two opposite sides of the first portion 431 in the second direction Y. The accommodating grooves 4312 of the first portions 431 of the plurality of abutting portions 43 jointly form an assembly groove 44. The delivery pipe 60 is accommodated in the assembly groove 44. The main pipe 70 is located on a side of the first portion 431 facing the box cover 12 in the third direction Z. Along the first direction X, a depth of the accommodating groove 4312 is greater than an outer diameter of the delivery pipe 60. The first surface 4311 and a side surface 4312a of the accommodating groove are connected through an arc surface 4313. The second portion 432 is connected to a side of the first portion 431 facing away from the box cover 12 in the third direction Z. The second portion 432 extends along the third direction Z away from the first portion 431. The second portion 432 abuts against the battery cell group 20 along the first direction X. The second portion 432 has a second surface 4321 abutting against the battery cell group 20. The second surface 4321 is coplanar with the first surface 4311. The plurality of abutting portions 43 include a first abutting portion 433. The first abutting portion 433 further includes a third portion 4331 and a reinforcing portion 45. The third portion 4331 is connected to a side of the first portion 431 facing the main pipe 70 in the third direction Z. The third portion 4331 extends along the third direction Z away from the first portion 431. The third portion 4331 abuts against the battery cell group 20 along the first direction X. The third portion 4331 has a third surface 4331a abutting against the battery cell group 20. The third surface 4331a is coplanar with the first surface 4311. The reinforcing portion 45 is connected to the third portions 4331 of at least two first abutting portions 433. The reinforcing portion 45 is connected to an end of the third portion 4331 away from the first portion 431 in the third direction Z. Along the first direction X, the main pipe 70 is located between the first wall 114 and the third portion 4331. A minimum distance between the first wall 114 and the third portion 4331 is greater than an outer diameter of the main pipe 70. The plurality of abutting portions 43 further include a second abutting portion 434. Along the third direction Z, the accommodating groove 4312 of the second abutting portion 434 runs through the side of the first portion 431 of the second abutting portion 434 facing the main pipe 70. The second abutting portion 434 is in one-to-one correspondence with the connection pipe 80. The connection pipe 80 is disposed in the accommodating groove 4312 of the second abutting portion 434.

It should be noted that, in the case of no conflict, the embodiments in this application and the features in the embodiments can be combined with each other.

The above are only preferred embodiments of this application and are not used to limit this application. For those of ordinary skill in the art, this application can have various changes and modifications. Any modifications, equivalent replacements, improvements, and the like made within the spirit and principle of this application should fall within the protection scope of this application.

## Claims

1. A battery, comprising:
a box having a first wall in a first direction;
a plurality of battery cell groups all accommodated in the box, wherein the plurality of battery cell groups are arranged along a second direction, the battery cell group comprises at least one battery cell, and the second direction intersects with the first direction;
a thermal management component, wherein the thermal management component is disposed between two adjacent ones of the battery cell groups along the second direction, and the thermal management component is configured to exchange heat with the battery cell; and
a protective member disposed between the first wall and the plurality of battery cell groups along the first direction, wherein the protective member is configured to transmit an external force received by the first wall to the battery cell group so as to protect the thermal management component.

2. The battery according to claim 1, wherein along the first direction, the protective member abuts against the plurality of battery cell groups, a side of the protective member facing the battery cell group is provided with an avoidance groove, and one end of the thermal management component is disposed in the avoidance groove.

3. The battery according to claim 2, wherein the protective member comprises:
a body portion disposed between the first wall and the plurality of battery cell groups along the first direction; and
a plurality of abutting portions spaced apart along the second direction on a side of the body portion facing the battery cell group, wherein each abutting portion abuts against one of the battery cell groups along the first direction, and the avoidance groove is formed between every two adjacent ones of the abutting portions.

4. The battery according to claim 3, wherein along the first direction, the thermal management component is spaced apart from the body portion.

5. The battery according to claim 3 or 4, wherein the abutting portion is bonded to the corresponding battery cell group.

6. The battery according to any one of claims 3 to 5, wherein the battery comprises a plurality of thermal management components spaced apart along the second direction, and the battery further comprises:
a delivery pipe disposed between the first wall and the plurality of battery cell groups along the first direction, wherein the delivery pipe extends along the second direction, the delivery pipe is connected to the plurality of thermal management components, and the delivery pipe is configured to supply a heat exchange medium to the thermal management component; and
the abutting portion comprises a first portion; along the first direction, the first portion has a first surface abutting against the battery cell group; the first surface is provided with an accommodating groove; the accommodating groove runs through side surfaces of two opposite sides of the first portion in the second direction; and the delivery pipe is accommodated in the accommodating groove.

7. The battery according to claim 6, wherein along the first direction, a depth of the accommodating groove is greater than an outer diameter of the delivery pipe.

8. The battery according to claim 6 or 7, wherein the first surface and a side surface of the accommodating groove are connected to each other through an arc surface.

9. The battery according to any one of claims 6 to 8, wherein the abutting portion further comprises:
a second portion connected to a side of the first portion in a third direction, wherein the second portion extends along the third direction away from the first portion, and the second portion abuts against the battery cell group along the first direction; and the first direction, the second direction, and the third direction are non-coplanar and intersect with each other.

10. The battery according to claim 9, wherein the plurality of abutting portions comprise a first abutting portion, and the first abutting portion further comprises:
a third portion connected to a side of the first portion facing away from the second portion in the third direction, the third portion extends along the third direction away from the first portion, and the third portion abuts against the battery cell group along the first direction.

11. The battery according to claim 10, wherein the protective member further comprises:
a reinforcing portion connected to the third portions of at least two of the first abutting portions.

12. The battery according to claim 11, wherein along the third direction, the reinforcing portion is connected to an end of the third portion away from the first portion.

13. The battery according to claim 11 or 12, wherein the box comprises:
a box body internally provided with an accommodating cavity with an opening, wherein the accommodating cavity is configured to accommodate the plurality of battery cell groups, the opening is provided on a side of the box body in the third direction, and the box body has the first wall in the first direction; and
a box cover covering the opening;
wherein along the third direction, the third portion is connected to a side of the first portion facing the box cover.

14. The battery according to any one of claims 6 to 13, wherein the battery further comprises:
a main pipe disposed between the first wall and the plurality of battery cell groups along the first direction, and the main pipe extends along the second direction; and
a plurality of connection pipes spaced apart along the second direction, wherein the connection pipe connects the main pipe and the delivery pipe, and the main pipe is configured to supply the heat exchange medium to the delivery pipe.

15. The battery according to claim 14, wherein along the third direction, the main pipe is located on one side of the first portion; and the first direction, the second direction, and the third direction are non-coplanar and intersect with each other.

16. The battery according to claim 15, wherein the plurality of abutting portions comprise a first abutting portion, and the first abutting portion further comprises:
a third portion connected to a side of the first portion facing the main pipe in the third direction, wherein the third portion extends along the third direction away from the first portion, and the third portion abuts against the battery cell group along the first direction;
wherein along the first direction, the main pipe is located between the first wall and the third portion.

17. The battery according to claim 16, wherein along the first direction, a minimum distance between the first wall and the third portion is greater than an outer diameter of the main pipe.

18. The battery according to any one of claims 15 to 17, wherein the plurality of abutting portions further comprise a second abutting portion; along the third direction, the accommodating groove of the second abutting portion runs through a side of the first portion of the second abutting portion facing the main pipe; the second abutting portion is in one-to-one correspondence with the connection pipe; and the connection pipe is disposed in the accommodating groove of the second abutting portion.

19. The battery according to any one of claims 1 to 18, wherein along the first direction, the protective member is spaced apart from the first wall.

20. The battery according to any one of claims 1 to 19, wherein the battery further comprises:
a delivery pipe disposed between the first wall and the plurality of battery cell groups along the first direction, wherein the delivery pipe extends along the second direction, the delivery pipe is connected to the thermal management component, and the delivery pipe is configured to supply a heat exchange medium to the thermal management component;
wherein a side of the protective member facing the battery cell group in the first direction is provided with an assembly groove, the assembly groove runs through the protective member along the second direction, and the delivery pipe is accommodated in the assembly groove.

21. The battery according to any one of claims 1 to 20, wherein along the first direction, the box has two opposite first walls, and the plurality of battery cell groups are located between the two first walls;
wherein the battery comprises two protective members, the two protective members are disposed opposite each other along the first direction, and the two protective members are respectively located between the two first walls and the plurality of battery cell groups.

22. An electric apparatus, comprising the battery according to any one of claims 1 to 21, wherein the battery is configured to supply electrical energy.
